# EUROPEAN PATENT SPECIFICATION

(11) **EP 4 089 503 B1**
(45) Date of publication and mention of the grant of the patent: **14.10.2026**
(21) Application number: 21752935.3
(22) Date of filing: 03.02.2021
(51) Int. Cl.: G06F 1/16, C09J 9/00, G09F 9/30

(54) **ELECTRONIC DEVICE INCLUDING DISPLAY**
ELEKTRONISCHE VORRICHTUNG MIT ANZEIGE
DISPOSITIF ÉLECTRONIQUE COMPRENANT UN ÉCRAN

(30) Priority: 10.02.2020 KR 20200015970; 06.01.2021 KR 20210001514
(43) Date of publication of application: 16.11.2022
(73) Proprietor: Samsung Electronics Co., Ltd., Suwon-si, Gyeonggi-do 16677 (KR)
(72) Inventor: CHO, Seongju, Suwon-si, Gyeonggi-do 16677 (KR); KIM, Jaekook, Suwon-si, Gyeonggi-do 16677 (KR); KIM, Jonghwa, Suwon-si, Gyeonggi-do 16677 (KR); SEO, Kwangsu, Suwon-si, Gyeonggi-do 16677 (KR); JEONG, Munjin, Suwon-si, Gyeonggi-do 16677 (KR)
(74) Representative: Gulde & Partner
(86) International application number: PCT/KR2021/001399
(87) International publication number: WO 2021/162322

(56) References cited:
- KR-A- 20160 027 944
- KR-A- 20180 015 003
- KR-A- 20190 001 388
- KR-B1- 101 513 901
- KR-B1- 101 657 136
- US-A1- 2016 062 391
- US-A1- 2018 343 332

## Description

### [Technical Field]

Various embodiments of the disclosure relate to an electronic device including a display.

### [Background Art]

With the advancement of digital technology, electronic devices are being provided in various forms such as smartphones, tablet personal computers (PCs), and personal digital assistants (PDAs). Recently, electronic devices have been developed as various wearable electronic devices that can be worn by users so as to improve portability and user accessibility. A display is an essential component of an electronic device such as a smartphone. A recent trend in electronic devices is to maximize the screen, which is an attempt to increase the sense of immersion by filling the front of the electronic device with the screen. Documents (US20160062391A1, KR20180015003A, and US20180343332A1) disclose conventional electronic devices disclosing conventional ways to protect the display.

### [Disclosure of Invention]

### [Technical Problem]

As components in an electronic device have different masses (or centers of mass) or weights, when an external impact is applied due to a drop or an external force, shaking, flow, vibration or deformation may occur in the individual components. In response to an external impact, it may be difficult for the components to make the same translational motion, and they may move (e.g., shake, flow, or vibrate) in different directions or displacement amounts for example. This may cause stress that can damage the display. In the case of a display, if an external impact is applied to the screen, the possibility of damage may be high.

Various embodiments of the disclosure may provide an electronic device including a display capable of reducing damage to the display from an external impact.

### [Solution to Problem]

The present invention is defined by the appended set of claims.

According to an embodiment of the disclosure, an electronic device may include: a housing that includes a front plate including a flat portion and a curved portion extended from the flat portion, a rear plate facing in a direction opposite to the front plate, and a side member surrounding a space between the front plate and the rear plate; a support member positioned in the space and connected to the side member; a flexible display positioned between the support member and the front plate in the space and visually exposed through the front plate; and an adhesive member positioned between the flexible display and the support member, wherein the support member may include: a first surface that at least partially overlaps the flat portion when viewed from above the front plate, faces the flexible display, and is coupled to the flexible display through a first portion of the adhesive member; and a second surface that at least partially overlaps the curved portion when viewed from above the front plate and faces the flexible display, and wherein a second portion of the adhesive member is disposed on the flexible display and is positioned to be spaced apart from the second surface while at least partially overlapping the second surface. Further, the electronic device may include a non-adhesive member disposed on the second portion of the adhesive member to face the second surface of the support member, wherein the second surface of the support member is positioned to be spaced apart from the flexible display, by a second distance greater than a first distance by which the first surface is spaced apart from the flexible display, to form a separation space between the non-adhesive member (1000) and the second surface (720) of the support member (211, 1820, 2020).

### [Advantageous Effects of Invention]

Various embodiments of the disclosure can reduce the stress generated in the display when an external impact occurs due to a fall or external force, thereby preventing the display from being damaged.

Additional effects obtainable or predicted from various embodiments of the disclosure will be disclosed explicitly or implicitly in the detailed description of the embodiments of the disclosure. For example, various effects predicted according to various embodiments of the disclosure will be disclosed in the following detailed description.

### [Brief Description of Drawings]

FIG. 1A is a front perspective view of a mobile electronic device according to an embodiment.
FIG. 1B is a rear perspective view of the electronic device of FIG. 1A according to an embodiment.
FIG. 2 is an exploded perspective view of the electronic device of FIG. 1A according to an embodiment.
FIG. 3A is an exploded perspective view of a display assembly according to an embodiment.
FIG. 3B is a plan view of the display assembly according to an embodiment.
FIG. 4 is a cross-sectional view taken along line A-A' in the display assembly of FIG. 3B according to an embodiment.
FIG. 5 is a plan view of a case including a side bezel structure and a first support member according to an embodiment.
FIG. 6 shows a fourth recess in the case of FIG. 5 according to an embodiment.
FIG. 7A shows a first adhesive member positioned between the display assembly of FIG. 3B and the case of FIG. 5 according to an embodiment.
FIG. 7B is a cross-sectional view illustrating a coupling structure between the display assembly and the case according to an embodiment.
FIG. 8 is a reference diagram for explaining an external impact applied to the electronic device according to an embodiment.
FIG. 9 is a cross-sectional view illustrating a coupling structure between the display assembly and the case according to another embodiment.
FIG. 10 is a cross-sectional view illustrating a coupling structure between the display assembly and the case according to an optional embodiment.
FIG. 11A illustrates a first adhesive member positioned between the display assembly and the case in another optional embodiment.
FIG. 11B is a cross-sectional view illustrating a coupling structure between the display assembly and the case by using the first adhesive member of FIG. 11A in an optional embodiment.
FIG. 12 is a cross-sectional view illustrating a coupling structure between the display assembly and the case according to various optional embodiments.
FIG. 13 is a cross-sectional view illustrating a coupling structure between the display assembly and the case according to another optional embodiment.
FIG. 14 is a cross-sectional view illustrating a coupling structure between the display assembly and the case according to another optional embodiment.
FIG. 15 is a cross-sectional view illustrating a coupling structure between the display assembly and the case according to another optional embodiment.
FIG. 16 shows a first adhesive member and a display support member in relation to, for example, the embodiment of FIG. 15.
FIG. 17 illustrates the case and first adhesive member in a claimed embodiment.
FIG. 18 is a cross-sectional view taken along line B-B' in, for example, FIG. 17.
FIG. 19 is a plan view of, for example, a portion indicated by reference numeral 1801 in FIG. 17.
FIG. 20A, 20B or 20C illustrates the case and the first adhesive member in another optional embodiment.

### [Mode for the Invention]

Hereinafter, various embodiments of the present document will be described with reference to the accompanying drawings.

It should be understood that the various embodiments of the present document and the terminology used are not intended to limit the technical features described herein to specific embodiments but to include various modifications, equivalents, and/or alternatives thereof. In connection with the description of the drawings, similar reference symbols may be used for similar or related components. The singular form of a noun corresponding to an item may include one or multiple instances of the item unless clearly indicated otherwise in a related context. In the present document, the expression "A or B", "at least one of A and B", "at least one of A or B", "A, B or C", "at least one of A, B and C", or "at least one of A, B or C" may include any one of the listed items or all possible combinations thereof. The terms "1st" and "2nd" or "first" and "second" may be used to simply distinguish one element from another element, without limiting corresponding elements in another aspect (e.g., importance or order).

The electronic device according to various embodiments disclosed herein can be one of various types of devices. The electronic device may include, for example, a portable communication device (e.g., smartphone), a computer, a portable multimedia device, a portable medical instrument, a camera, a wearable device, or a home appliance. The electronic device according to an embodiment of the present document is not limited to the above-mentioned devices.

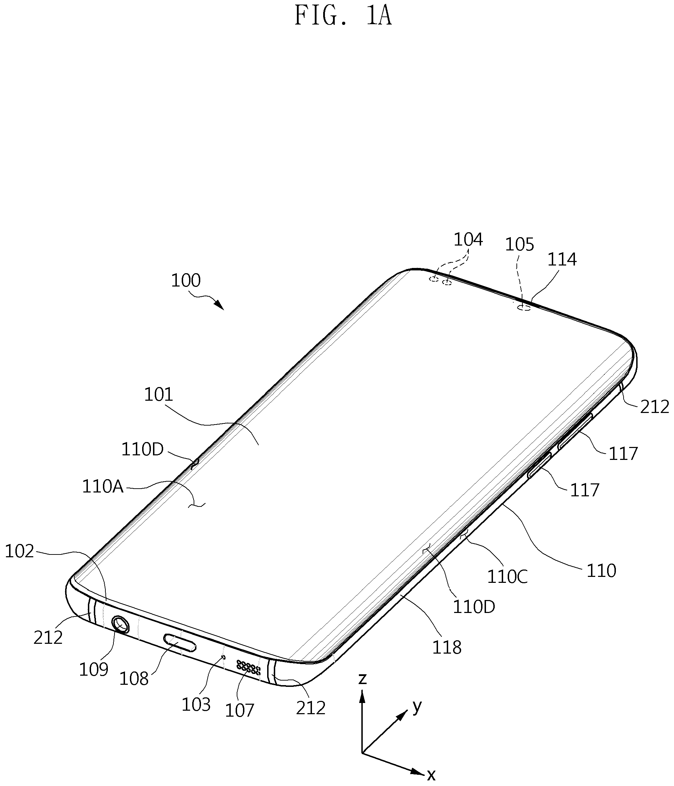

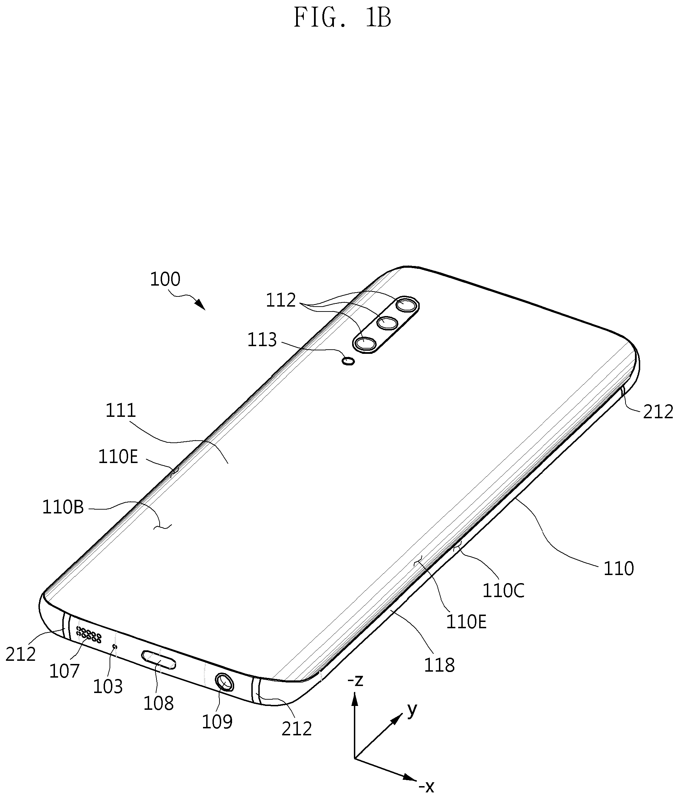

FIG. 1A is a front perspective view of a mobile electronic device 100 according to an embodiment. FIG. 1B is a rear perspective view of the electronic device 100 of FIG. 1A according to an embodiment.

With reference to FIGS. 1A and 1B, in one embodiment, the electronic device 100 may include a housing 110 that includes a first surface (or front surface) 110A, a second surface (or rear surface) 110B, and a side surface 110C surrounding a space between the first surface 110A and the second surface 110B. In another embodiment (not shown), the housing 110 may refer to a structure forming a part of the first surface 110A, the second surface 110B, and the side surface 110C. According to an embodiment, the first surface 110A may be formed by a front plate 102 (e.g., glass plate including various coating layers, or polymer plate) whose at least a portion is substantially transparent. The second surface 110B may be formed by a rear plate 111 that is substantially opaque. The rear plate 111 may be formed by, for example, coated or tinted glass, ceramic, polymer, metal (e.g., aluminum, stainless steel (STS), or magnesium), or a combination of at least two thereof. The side surface 110C may be formed by a side bezel structure (or "side member") 118 coupled to the front plate 102 and the rear plate 111 and including a metal and/or a polymer. In a certain embodiment, the rear plate 111 and side bezel structure 118 may be integrally formed and include the same material (e.g., metal material such as aluminum).

With reference to FIG. 1A, the front plate 102 may include two first regions 110D that are curved and seamlessly extended from the first surface 110A toward the rear plate 111. The first regions 110D may be formed respectively adjacent to the two long edges (not shown) of the front plate 102. With reference to FIG. 1B, the rear plate 111 may include two second regions 110E that are curved and seamlessly extended from the second surface 110B toward the front plate 102. The second regions 110E may be formed respectively adjacent to the two long edges (not shown) of the rear plate 111. The side surface 110C may have a first thickness (or width) (e.g., height in z-axis direction) on a side where the first regions 110D or the second regions 110E are not located, and may have a second thickness thinner than the first thickness on a side where the first regions 110D or the second regions 110E are located. In a certain embodiment (not shown), the front plate 102 may be implemented by including one of the first regions 110D or may be implemented without the curved first regions 110D. In a certain embodiment (not shown), the rear plate 111 may be implemented by including one of the second regions 110E or may be implemented without the curved second regions 110E.

According to an embodiment, the electronic device 100 may include at least one of a display 101, audio modules 103, 107 and 114, sensor module 104, camera modules 105, 112 and 113, key input devices 117, or connector holes 108 and 109. In a certain embodiment, at least one of the above elements (e.g., key input devices 117) may be omitted from the electronic device 100, or another element (e.g., fingerprint sensor, or light-emitting element) may be added to the electronic device 100.

The display 101 may be visually exposed, for example, through a significant portion of the front plate 102. In a certain embodiment, the edge of the display 101 may be formed to have substantially the same shape as the adjacent periphery of the front plate 102. In another embodiment (not shown), to expand the exposed area of the display 101, the distance between the periphery of the display 101 and the periphery of the front plate 102 may be formed substantially the same.

In another embodiment (not shown), a recess or opening may be formed in a portion of the screen display area of the display 101, and at least one of the audio module 114, the sensor module 104, or a first camera device 105 may be included in alignment with the recess or the opening. In another embodiment (not shown), at least one of the audio module 114, the sensor module 104, or the camera module 105 may be positioned adjacent to the back of the screen display area (e.g., active area) of the display 101. In another embodiment (not shown), the display 101 may be disposed to be coupled or adjacent to a touch sensing circuit, a pressure sensor capable of measuring the intensity (pressure) of a touch, and/or a digitizer for detecting a magnetic field type stylus pen.

The audio modules 103, 107 and 114 may include a microphone hole 103, and speaker holes 107 and 114. The microphone hole 103 may include a microphone disposed therein to obtain an external sound, and a plurality of microphones may be arranged to sense the direction of a sound in a certain embodiment. The speaker holes 107 and 114 may include an external speaker hole 107 and a call receiver hole 114. In a certain embodiment, the speaker holes 107 and 114 and the microphone hole 103 may be implemented as a single hole, or a speaker may be included without speaker holes 107 and 114 (e.g., piezo speaker).

The sensor module 104 may generate an electrical signal or a data value corresponding to an internal operating state of the electronic device 100 or an external environmental state. The sensor module 104 may include, for example, a proximity sensor that generates a signal regarding the proximity of an external object based on light passing through a region of the first surface 110A of the housing 110. According to various embodiments, the sensor module 104 may be various biometric sensors such as a fingerprint sensor for detecting biometric information based on light passing through a region of the first surface 110A. According to various embodiments, the fingerprint sensor may be disposed on the back of the display 101. According to various embodiments (not shown), the sensor module may include an HRM sensor and/or a fingerprint sensor positioned adjacent to the second surface 110B of the housing 110. The electronic device 100 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor (e.g., sensor module 104).

The camera modules 105, 112 and 113 may include, for example, a first camera device 105, a second camera device 112, and/or a flash 113. The first camera device 105 may generate an image signal based on light passing through a region of the first surface 110A of the housing 110. The second camera device 112 and the flash 113 may be disposed on the second surface 110B of the housing 110. The camera devices 105 and 112 may include one or more lenses, an image sensor, and/or an image signal processor. The flash 113 may include, for example, a light emitting diode or a xenon lamp. In a certain embodiment, two or more lenses (infrared camera, wide-angle and telephoto lenses) and image sensors may be arranged in one surface of the electronic device 100.

The key input devices 117 may be arranged in the side surface 110C of the housing 110. In another embodiment, the electronic device 100 may not include some or all of the above-mentioned key input devices 117, and a key input device 117 not included may be implemented on the display 101 in a different form such as a soft key. In a certain embodiment, the key input device may include a sensor module (not shown) disposed on the second surface 110B of the housing 110.

A light emitting element (not shown) may be positioned adjacent to the first surface 110A inside the housing 110, for example. The light emitting element may provide state information of the electronic device 100 in a light form. In another embodiment, the light emitting element may provide a light source interacting with, for example, the operation of the first camera device 105. The light emitting element may include, for example, an LED, an IR LED, or a xenon lamp.

The connector holes 108 and 109 may include a first connector hole 108 capable of accepting a connector (e.g., USB connector) for transmitting and receiving power and/or data to and from an external electronic device, and/or a second connector hole 109 (e.g., earphone jack) capable of accepting a connector for transmitting and receiving an audio signal to and from an external electronic device.

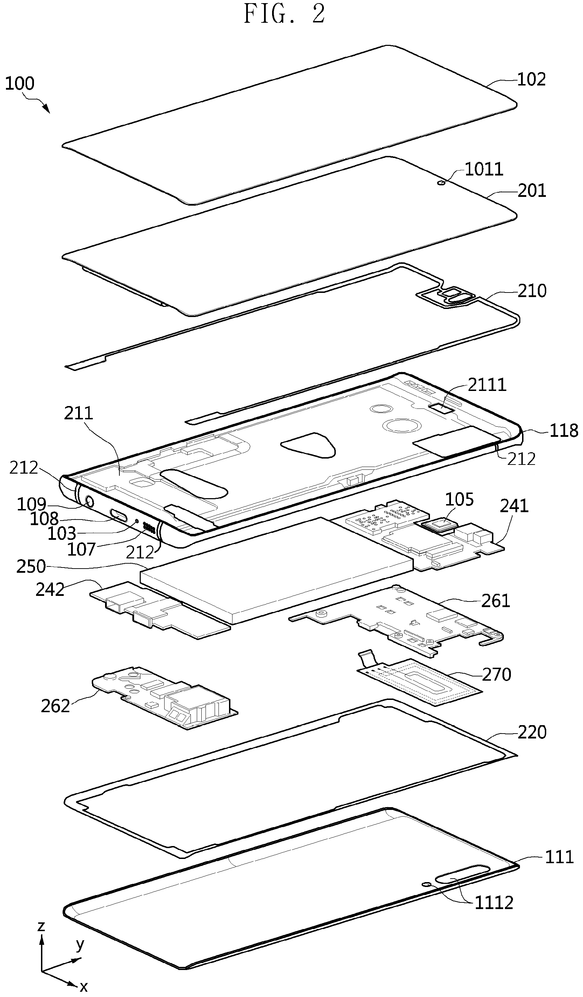

FIG. 2 is an exploded perspective view of the electronic device 100 of FIG. 1A according to an embodiment.

With reference to FIG. 2, according to an embodiment, the electronic device 100 may include a side bezel structure 118, a first support member 211 (e.g., bracket), a front plate 102, a display 101, a first adhesive member 210, a first substrate assembly 241, a second substrate assembly 242, a battery 250, a second support member 261, a third support member 262, and an antenna structure 270, a rear plate 111, or a second adhesive member 220. In a certain embodiment, at least one of the components (e.g., second support member 261, or third support member 262) may be omitted from the electronic device 100, or another component may be additionally included in the electronic device 100.

The first support member 211 is arranged, for example, inside the electronic device 100, and is connected to the side bezel structure 118 or may be integrally formed with the side bezel structure 118. The first support member 211 may be made of, for example, a metal material and/or a non-metal material (e.g., polymer). With reference to FIGS. 1A, 1B and 2, in an embodiment, the side bezel structure 118 may include a plurality of conductive portions separated with a cut-off portion therebetween. The non-conductive portion included in the first support member 211 may extend to the cut-off portion to form an insulating portion 212 between plural conductive portions of the side bezel structure 118. The insulating portion 212 may form a part of the side surface 110C (refer to FIG. 1A or 1B).

The display 101 is coupled to, for example, one surface of the first support member 211 and is positioned between the first support member 211 and the front plate 102. The first substrate assembly 241, the second substrate assembly 242, and the battery 250 may be coupled to, for example, the other surface of the first support member 211 and may be positioned between the first support member 211 and the rear plate 111.

According to an embodiment, an optically transparent adhesive member (not shown) such as an optical clear adhesive (OCA) may be disposed between the front plate 102 and the display 101.

According to an embodiment, the first adhesive member 210 is positioned between the first support member 211 and the display 101 to couple the first support member 211 and the display 101. The first adhesive member 210 may be implemented in a form that at least partially extends along the edge of the display 101. The first adhesive member 210 may be an adhesive material of various polymers.

According to an embodiment, the display 101 may include an opening 1011 formed at at least a portion corresponding to an optical sensor (e.g., first camera device 105 or biometric sensor) disposed inside the electronic device 100. The opening 2011 may be implemented, for example, in the form of a through hole. According to a certain embodiment, the opening 1011 may be formed in the shape of a notch. The first support member 211 may include an opening 2111 positioned in correspondence to the opening 1011 of the display 101. The optical sensor may receive external light through the opening 1011 of the display 101, the opening 2111 of the first support member 211, and a region of the front plate 102 aligned therewith. According to various embodiments (not shown), the opening 1011 of the display 101 may be replaced with a substantially transparent region formed by modifying the pixel structure and/or wiring structure.

According to an embodiment, the first substrate assembly 241 may include a first printed circuit board (PCB) (not shown). The display 101 or the first camera device 105 may be electrically connected to the first printed circuit board through various electrical paths such as a flexible printed circuit board (FPCB). The first substrate assembly 241 may include various electronic components electrically connected to the first printed circuit board. These electronic components may be disposed on the first printed circuit board or may be electrically connected to the first printed circuit board through electrical paths such as a cable or FPCB.

According to various embodiments, the first substrate assembly 241 may include a main PCB, a slave PCB disposed to partially overlap the main PCB, and/or an interposer substrate between the main PCB and the slave PCB.

According to an embodiment, the second substrate assembly 242 may be disposed to be spaced apart from the first substrate assembly 241 with the battery 250 interposed therebetween when viewed from above the front plate 102. The second substrate assembly 242 may include a second printed circuit board electrically connected to the first printed circuit board of the first substrate assembly 241. The second substrate assembly 242 may include various electronic components electrically connected to the second printed circuit board. These electronic components may be disposed on the second printed circuit board or may be electrically connected to the second printed circuit board through electrical paths such as a cable or FPCB. According to an embodiment, the electronic component may be a USB connector utilizing the first connector hole 108, an earphone jack utilizing the second connector hole 109, a microphone utilizing the microphone hole 103, or a speaker utilizing the speaker hole 107.

According to an embodiment, the battery 250 may be positioned between the first support member 211 and the rear plate 111, and may be coupled to the first support member 211. The battery 250 is a device for supplying power to at least one component of the electronic device 100, and may include, for example, a non-rechargeable primary cell, a rechargeable secondary cell, or a fuel cell. At least some of the battery 250 may be disposed substantially coplanar with, for example, the first printed circuit board of the first substrate assembly 241 or the second printed circuit board of the second substrate assembly 242. The battery 250 may be integrally disposed inside the electronic device 100, or may be disposed attachably and detachably with the electronic device 100.

According to an embodiment, the second support member 261 may be positioned between the first support member 211 and the rear plate 111, and may be coupled to the first support member 211 through a fastening element such as a bolt. At least some of the first substrate assembly 241 may be disposed between the first support member 211 and the second support member 261, and the second support member 261 may cover and protect the first substrate assembly 241.

According to an embodiment, when viewed from above the front plate 102, the third support member 262 may be positioned to be spaced apart from the second support member 261 with the battery 250 interposed therebetween. The third support member 262 may be disposed between the first support member 211 and the rear plate 111, and may be coupled to the first support member 211 through a fastening element such as a bolt. At least some of the second substrate assembly 242 may be positioned between the first support member 211 and the third support member 262, and the third support member 262 may cover and protect the second substrate assembly 242.

According to an embodiment, the second support member 261 and/or the third support member 262 may be made of a metal material and/or a non-metal material (e.g., polymer). According to various embodiments, the second support member 261 and/or the third support member 262 may be referred to as a rear case.

According to a certain embodiment (not shown), an integral substrate assembly including the first substrate assembly 241 and second substrate assembly 242 may be implemented. In this case, the substrate assembly may further include a portion extended between the battery 250 and the side member 118. In this case, according to various embodiments, an integral support member including the second support member 261 and third support member 262 may be implemented.

According to an embodiment, the antenna structure 270 may be disposed between the second support member 261 and the rear plate 111. The antenna structure 270 may be implemented, for example, in the form of a film such as an FPCB. According to an embodiment, the antenna structure 270 may include at least one conductive pattern used as a loop-type radiator. For example, the at least one conductive pattern may include a planar spiral conductive pattern (e.g., planar coil or pattern coil).

According to an embodiment, the conductive pattern of the antenna structure 270 may be electrically connected to a wireless communication circuit (or wireless communication module) disposed on the first substrate assembly 241. For example, the conductive pattern may be utilized for short-range wireless communication such as near field communication (NFC). As another example, the conductive pattern may be utilized for magnetic secure transmission (MST) for transmitting and/or receiving a magnetic signal.

According to various embodiments, the conductive pattern of the antenna structure 270 may be electrically connected to a power transceiver circuit disposed on the first substrate assembly 241. Through the conductive pattern, the power transceiver circuit may wirelessly receive power from an external electronic device or may wirelessly transmit power to an external electronic device. The power transceiver circuit may include a power management module, such as a power management integrated circuit (PMIC) or a charger integrated circuit (IC). The power transceiver circuit may charge the battery 250 by using power wirelessly received through the conductive pattern.

According to an embodiment, the rear plate 111 may include an opening 1112 for disposing the second camera device 112 and the flash 113 included in the first substrate assembly 241 to be exposed to the second surface 110B.

According to an embodiment, the second adhesive member 220 may be positioned between the first support member 211 and the rear plate 111 to couple the first support member 211 and the rear plate 111. The second adhesive member 220 may be implemented in a form that at least partially extends along the edge of the rear plate 111. The second adhesive member 220 may be an adhesive material of various polymers.

According to various embodiments (not shown), the electronic device 100 may further include various components according to its form of provision. Although it is not possible to enumerate all of these components due to various variations according to the convergence trend of the electronic device 100, components comparable to those above-mentioned may be further included in the electronic device 100. According to various embodiments, some components may be excluded from the above components or replaced with other components according to the form of provision.

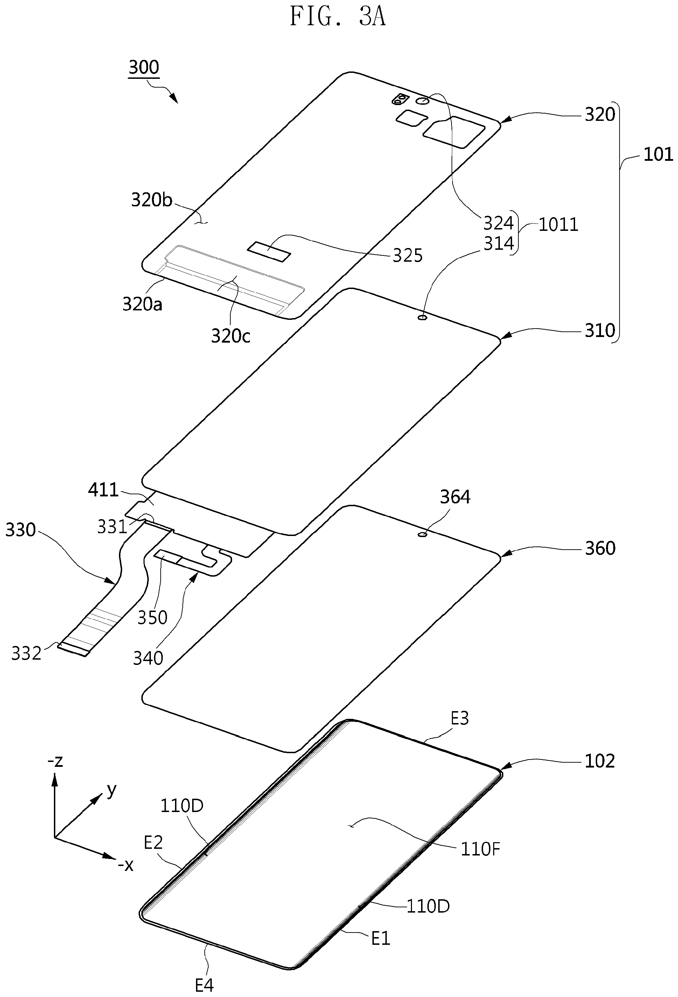

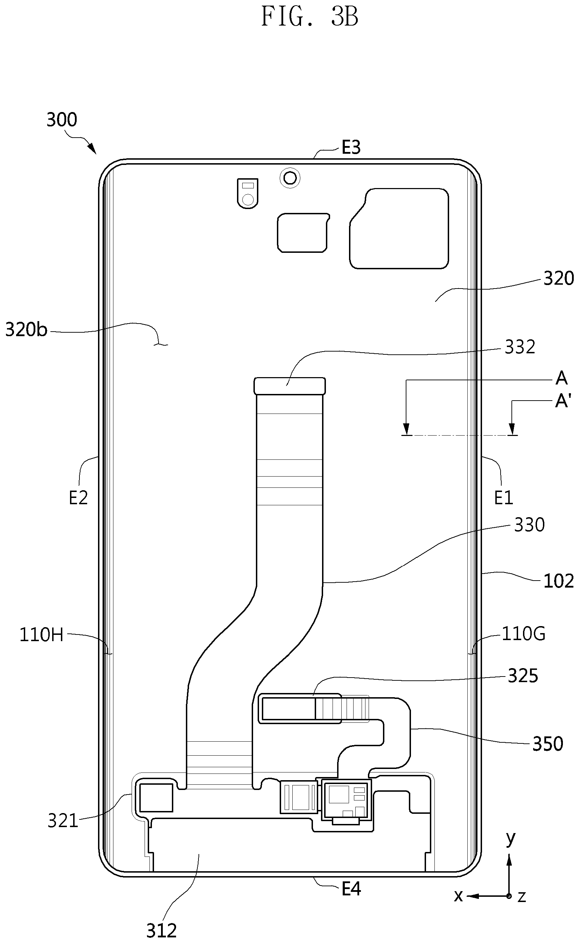

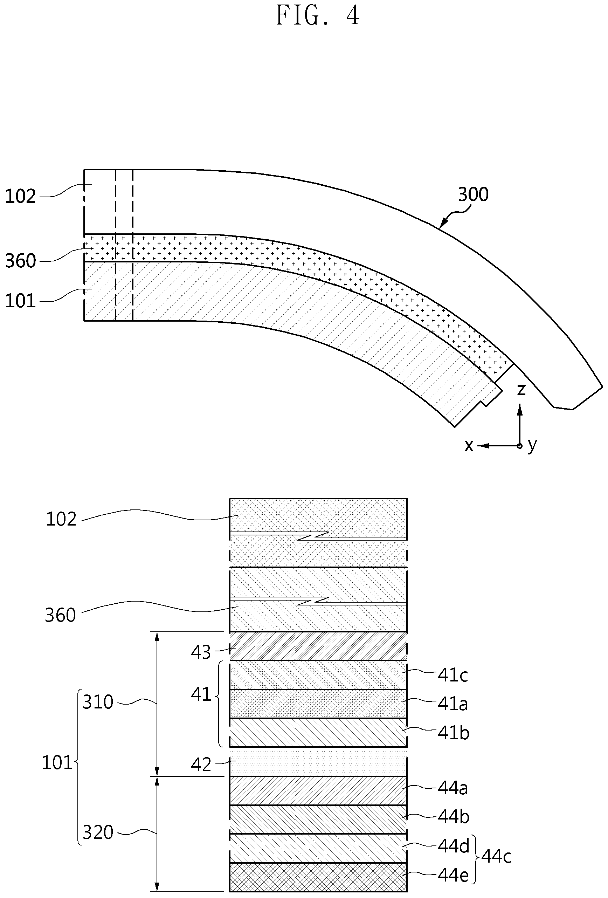

FIG. 3A is an exploded perspective view of a display assembly 300 according to an embodiment. FIG. 3B is a plan view of the display assembly 300 according to an embodiment. FIG. 4 is a cross-sectional view taken along line A-A' in the display assembly 300 of FIG. 3B according to an embodiment.

With reference to FIGS. 3A, 3B and 4, in one embodiment, the display assembly (or display module) 300 may include a display 101, a first flexible printed circuit board 330, a second flexible printed circuit board 340, an optically transparent adhesive member 360, or a front plate 102.

According to an embodiment, the display (e.g., flexible display) 101 may include a first layer structure 310 and a second layer structure 320 coupled (e.g., bonded) to the first layer structure 310. An adhesive member of various polymers (not shown) may be disposed between the first layer structure 310 and the second layer structure 320. The optically transparent adhesive member 360 may be positioned between the front plate 102 and the first layer structure 310. The first layer structure 310 may be positioned between the optically transparent adhesive member 360 and the second layer structure 320. The display 101 may be coupled to the front plate 102 by using the optically transparent adhesive member 360 (e.g., optical clear adhesive (OCA), optical clear resin (OCR), or super view resin (SVR)). The front plate (or transparent cover) 102 (e.g., window) may cover the display 101 to protect the display 101 from the outside.

According to an embodiment, the first layer structure 310 may include a display panel 41, a base film 42, or an optical layer 43. The display panel 41 may be positioned between the optical layer 43 and the base film 42. The base film 42 may be positioned between the display panel 41 and the second layer structure 320. The optical layer 43 may be positioned between the optically transparent adhesive member 360 and the display panel 41. An adhesive member of various polymers (not shown) may be positioned between the display panel 41 and the base film 42, between the base film 42 and the second layer structure 320, and/or between the display panel 41 and the optical layer 43. The display panel 41 may include, for example, a light emitting layer 41a, a thin film transistor (TFT) film 41b, and/or an encapsulation layer 41c (e.g., thin-film encapsulation (TFE)). The light emitting layer 41a may include a plurality of pixels implemented with light emitting elements such as organic light emitting diodes (OLEDs) or micro LEDs. The light emitting layer 41a may be disposed on the TFT film 41b through organic material evaporation. The TFT film 41b may be positioned between the light emitting layer 41a and the base film 42. The TFT film 41b may indicate a film structure in which one or more thin film transistors (TFTs) are disposed on a flexible substrate (e.g., PI film) through a series of processes such as deposition, patterning, and etching. At least one TFT may control a current to a light emitting element of the light emitting layer 41a to turn on or off a pixel or adjust the brightness of the pixel. The at least one TFT may be implemented with, for example, an amorphous silicon (a-Si) TFT or a low-temperature polycrystalline silicon (LTPS) TFT. The display panel 41 may include a storage capacitor, and the storage capacitor may maintain a voltage signal in a pixel, maintain the voltage applied to the pixel within one frame, or reduce a change in the gate voltage of the TFT due to leakage during the light emission time. By a routine (e.g., initialization, data write) for controlling at least one TFT, the storage capacitor may maintain the voltage applied to the pixel at a preset time interval. In an embodiment, the display panel 41 may be implemented based on OLEDs, and the encapsulation layer 41c may cover the light emitting layer 41a. Organic materials and electrodes that emit light in OLEDs are very sensitive to oxygen and/or moisture and may lose their luminescent properties. The encapsulation layer 41c may seal the light emitting layer 41a so that oxygen and/or moisture do not penetrate into the OLEDs. The base film 42 may include a flexible film made of a polymer or plastic such as polyimide or polyester (PET). The base film 42 may serve to support and protect the display panel 41. In a certain embodiment, the base film 42 may be referred to as a protective film, a back film, or a back plate.

The second layer structure (or lower panel) 320 may include a plurality of layers for various functions. An adhesive member of various polymers (not shown) may be positioned between plural layers included in the second layer structure 320. The second layer structure 320 may include, for example, a light blocking layer 44a, a buffer layer 44b, or a lower layer 44c. The light blocking layer 44a may be positioned between the base film 42 and the buffer layer 44b. The buffer layer 43b may be positioned between the light blocking layer 43a and the lower layer 43c. The light blocking layer 43a may block at least some of light incident from the outside. For example, the light blocking layer 43a may include an embo layer. The embo layer may be a black layer including an uneven pattern. The buffer layer 43b may mitigate an external impact applied to the display 101. For example, the buffer layer 43b may include a sponge layer or a cushion layer. The lower layer 43c may diffuse, disperse, or dissipate heat generated in the electronic device 100 or the display 101. The lower layer 43c may absorb or shield electromagnetic waves. The lower layer 43c may mitigate an external impact applied to the electronic device 100 or the display 101. For example, the lower layer 43c may include a composite sheet 43d or a copper sheet 43e. In one embodiment, the composite sheet 43d may be a sheet processed by combining layers or sheets having different properties. For example, the composite sheet 43d may include at least one of polyimide or graphite. The composite sheet 43d may be replaced with a single sheet including one material (e.g., polyimide or graphite). A composite sheet 43d may be positioned between the buffer layer 43b and the copper sheet 43e. The copper sheet 43e may be replaced with various other metal sheets. In a certain embodiment, at least some of the lower layer 43c, as a conductive member (e.g., metal plate), may help to reinforce the rigidity of the electronic device 100, shield ambient noise, and be used to dissipate heat emitted from a nearby heat generation component (e.g., display driving circuit (e.g., DDI)). The conductive member may include at least one of, for example, copper (Cu), aluminum (Al), stainless steel (SUS), or CLAD (e.g., stacked member in which SUS and Al are alternately disposed). The lower layer 43c may include various layers for various other functions. According to various embodiments (not shown), at least one polymer layer (e.g., layer including PI, PET or TPU) other than the base film 42 may be further disposed on the rear surface of the display panel 41. In various embodiments, at least one of the plural layers included in the second layer structure 320 (e.g., light blocking layer 43a, buffer layer 43b, composite sheet 43d, and copper sheet 43e) may be omitted. In various embodiments, the arrangement order of the plural layers included in the second layer structure 320 may be variously changed without being limited to the embodiment of FIG. 4. The optical layer 43 may improve the image quality of the screen. The optical layer 43 may include, for example, a polarizing layer (or polarizer), or a retardation layer (or retarder). The polarizing layer and the retardation layer can improve the outdoor visibility of the screen. The optical layer 43 may selectively transmit light that is generated from, for example, a light source of the display panel 41 and vibrates in a specific direction. In a certain embodiment, the polarizing layer and retardation layer may be combined into one layer, and this layer may be referred to as "circularly polarizing layer". When unpolarized light such as sunlight passes through the front plate 102 and the optically transparent adhesive member 360 and is incident on the display 101, the unpolarized light may pass through the polarizing layer to be converted into linearly polarized light, and the linearly polarized light may pass through the retardation layer to be converted into circularly polarized light. For example, when unpolarized light passes through a 90-degree polarizing layer, it may be converted into 90-degree linearly polarized light; and when the 90-degree linearly polarized light passes through a 45-degree retardation layer, it may be converted into circularly polarized light whose polarization axis rotates. The retardation layer may have characteristics of a quarter wave retarder (λ/4 retarder). For example, when sunlight is incident on the display 101 through the front plate 102 and the optically transparent adhesive member 360, most of the sunlight may be reflected from a metal such as an electrode included in the display panel 51, which may make it difficult for the user to recognize the screen. According to an embodiment, the polarizing layer and the retardation layer may improve the outdoor visibility by preventing reflection of light coming from the outside. For example, circularly polarized light changed by the retardation layer having quarter wave retarder (λ/4 retarder) characteristics may be reflected by the light emitting layer 41a, and the reflected circularly polarized light may pass through the retardation layer again and be changed with a total λ/2 retardation into linearly polarized light perpendicular to the initial 90-degree polarization. This 180-degree linearly polarized light cannot be emitted to the outside through the 90-degree polarizing layer. In a certain embodiment, the polarizing layer (or circularly polarizing layer) may be omitted; in this case, a black pixel define layer (PDL) and/or a color filter may be provided in place of the polarizing layer.

According to an embodiment, the display assembly 300 may include a touch sensing circuit (e.g., touch sensor). The touch sensing circuit may be implemented with a transparent conductive layer (or film) based on various conductive materials such as indium tin oxide (ITO). For example, the touch sensing circuit may be disposed between the front plate 102 and the optical layer 43 (e.g., add-on type). As another example, the touch sensing circuit may be disposed between the optical layer 43 and the display panel 41 (e.g., on-cell type). As another example, the display panel 41 may include a touch sensing circuit or a touch sensing function (e.g., in-cell type). In a certain embodiment, the display 101 may include a conductive pattern such as a metal mesh (e.g., aluminum metal mesh) as a touch sensing circuit arranged in the encapsulation layer 41c between the encapsulation layer 41c and the optical layer 43. For example, in correspondence to bending of the display 101 coupled with the front plate 102 including a flat portion and a curved portion, the metal mesh may have a greater durability than that of the transparent conductive layer implemented with ITO. In a certain embodiment, the display 101 may further include a pressure sensor (not shown) capable of measuring the intensity (pressure) of a touch. In a certain embodiment, the display 101 may include an electromagnetic induction panel (e.g., digitizer) for detecting a magnetic field type stylus pen. The magnetic induction panel may be included in the second layer structure 320, and may be positioned, for example, between the buffer layer 44b and the lower layer 44c. The plural layers included in the display panel 41 or the second layer structure (or, lower panel) 320, the stacked structure thereof, or the stacking order thereof may be varied. The display 101 may be implemented by omitting some of the components (e.g., electromagnetic induction panel) or adding other components according to its provision form or convergence trend.

According to an embodiment, the display panel 41 may include an extension part 411 that is not included in the screen. The light emitting layer 41a and the encapsulation layer 41c may be not extended to the extension part 411. In a certain embodiment, the TFT film 41b may be implemented in a form that is extended to the extension part 411 but does not include a TFT in the extension part 411. Electrical paths included in the extension part 411 may be disposed on the TFT film 41b. In a certain embodiment, the light emitting layer 41a may be implemented in a form that is extended to the extension part 411 but includes substantially no pixels in the extension part 411. In a certain embodiment, the encapsulation layer 41c may be extended to the extension part 411. The first flexible printed circuit board 330 may be electrically connected to the extension part 411. The extension part 411 may include electrical paths (e.g., wirings implemented with a conductive pattern) electrically connecting at least one TFT of the TFT film 41b and the first flexible printed circuit board 330. One end 331 of the first flexible printed circuit board 330 may be electrically connected to the extension part 411, and the other end 332 of the first flexible printed circuit board 330 may be electrically connected to the first printed circuit board included in the first substrate assembly 241 in FIG. 2.

According to an embodiment, one end 331 of the first flexible printed circuit board 330 may be electrically connected to the extension part 411 of the display panel 41 by using anisotropic conductive film (ACF) bonding. The ACF may be an anisotropic conductive film in which fine conductive particles (e.g., Ni, carbon, or solder ball) are mixed with an adhesive resin (e.g., thermosetting resin) to form a film so as to conduct electricity in only one direction. When an ACF is placed between the first flexible printed circuit board 330 and the extension part 411 of the display panel 41 and is compressed by applying heat and pressure, the conductive pattern (not shown) formed on the extension part 411 may be electrically connected to the conductive pattern formed on the first flexible printed circuit board 330 through conductive particles, and the adhesive resin may couple (e.g., bond) the extension part 411 and the first flexible printed circuit board 330 together. Electrical paths included in the extension part 411 may electrically connect at least one TFT and the first flexible printed circuit board 330. For example, the electrical paths may be formed in the TFT film 41b based on LTPS, LTPO, or a-Si together with the TFT. The first flexible printed circuit board 330 may be electrically connected to the display 101 through various other methods (e.g., connection between connectors). The other end 332 of the first flexible printed circuit board 330 may include a connector for electrically connecting to the first printed circuit board included in the first substrate assembly 241 in FIG. 2.

According to an embodiment, a display driving circuit (e.g., display drive integrated circuit (DDI)) (not shown) may be disposed on the extension part 411 of the display panel 41 (e.g., COP (chip-on panel or chip-on plastic) scheme). In a certain embodiment, the display driving circuit may be disposed in the display assembly 300 through a chip-on film (COF) scheme. The COF scheme may have a structure in which the display driving circuit is disposed on a separate flexible film substrate electrically connecting the extension part 411 of the display panel 41 and the first flexible printed circuit board 330. In the COF scheme, the flexible film substrate and the first flexible printed circuit board 330 may be connected through ACF bonding. In a certain embodiment, the display driving circuit may be disposed on the extension part 411 of the display panel 41 (or, flexible film substrate in the COF scheme) through tape automated bonding (TAB). A processor (e.g., application processor (AP)) may be disposed on the first printed circuit board included in the first substrate assembly 241 of FIG. 2, and a command signal issued by the processor may be transmitted to the display driving circuit through the first flexible printed circuit board 330. The display driving circuit may be electrically connected to the TFTs of the display 101 and the first flexible printed circuit board 330 through electrical paths included in the extension part 411 of the display panel 41. The display driving circuit may serve as a signal path between the display 101 and the processor to control pixels through TFTs in the display 101. For example, the display driving circuit has a function of turning on or off pixels included in the display 101 and may be electrically connected to the gate electrode of a TFT. The display driving circuit has a function of making a color difference by adjusting the amount of RGB (red, green, blue) signals of a pixel, and may be electrically connected to the source electrode of the TFT. The TFT may include a gate line electrically connecting the display driving circuit and the gate electrode of the TFT, and a source line (or data line) electrically connecting the display driving circuit and the source electrode of the TFT. In a certain embodiment, the display driving circuit may operate in response to a red, green, blue, white (RGBW) scheme in which a white pixel is added to RGB pixels.

According to a certain embodiment (not shown), the display driving circuit may be disposed on the first flexible printed circuit board 330.

According to various embodiments, the display driving circuit may be a DDI package. The DDI package may include a DDI (or DDI chip), a timing controller (T-CON), a graphics RAM (GRAM), or a power generating circuit. In a certain embodiment, the graphics RAM may be omitted, or a memory provided separately from the display driving circuit may be used. The timing controller may convert a data signal input from the processor into a signal required by the DDI. The timing controller may serve to adjust input data information into signals suitable for a gate driver (or gate IC) and a source driver (or source IC) of the DDI. The graphics RAM may serve as a memory that temporarily stores data to be input to the driver (or IC) of the DDI. The graphics RAM may store the input signal and send it back to the driver of the DDI, and may interact with the timing controller to process a signal at this time. The power generating circuit may generate a voltage for driving the display 101 and supply voltages necessary for the gate driver and the source driver of the DDI.

According to an embodiment, the extension part 411 of the display panel 41 may be bent on the side of the side surface 320a of the second layer structure 320 and fixed to one surface of the second layer structure 320 by using an adhesive member. For example, the second layer structure 320 may include the other surface 320b located on the opposite side to the one surface (not shown) facing the first layer structure 310, and the extension part 411 of the display panel 41 may be disposed in a mounting portion 320c (e.g., recess) formed on the other surface 320b. With reference to FIGS. 2 and 3B, the one surface 320b of the second layer structure 320 may face the first support member 211. The first flexible printed circuit board 330 may be extended between the second layer structure 320 and the first support member 211, and one end 332 of the first flexible printed circuit board 330 may be electrically connected to the first printed circuit board of the first substrate assembly 261 through an opening (not shown) formed in the first support member 211.

According to an embodiment, the second flexible printed circuit board 340 may be electrically connected to the extension part 411 of the display panel 41. For example, one end (not shown) of the second flexible printed circuit board 340 may be electrically connected to the extension part 411 of the display panel 41 based on ACF bonding. The second flexible printed circuit board 340 may be electrically connected to the extension part 411 of the display panel 41 through various other schemes (e.g., connection between connectors). In an embodiment, an optical sensor 350 may be disposed on the second flexible printed circuit board 340. The optical sensor 350 may include an opening 325 formed in the second substrate assembly 320. With reference to FIGS. 2 and 3B, the second flexible printed circuit board 340 may be extended between the second layer structure 320 and the first support member 211, and the optical sensor 350 disposed on the second flexible printed circuit board 340 may be positioned in the opening 325 of the second substrate assembly 320. For example, the optical sensor 350 may include a light emitting portion (e.g., light emitting diode (LED)) that outputs light of at least one wavelength band, or a light receiving portion (e.g., photodiode) that receives light of one or more wavelength bands to generate an electrical signal. Light output from the light emitting portion of the optical sensor 350 may pass through the first layer structure 310, the optically transparent adhesive member 360, and the front plate 102 to be emitted to the outside. The light reflected or scattered by an external object may pass through the front plate 102, the optically transparent adhesive member 360, and the first layer structure 310 to be introduced into the light receiving portion of the optical sensor 350. The light receiving portion of the optical sensor 350 may provide an electrical signal based on the incident light to the processor disposed in the substrate assembly 261 in FIG. 2. The processor may acquire various information based on the electrical signal obtained from the optical sensor 350. According to an embodiment, the optical sensor 350 may be various biometric sensors such as a fingerprint sensor.

According to an embodiment, the optically transparent adhesive member 360 may be positioned between the front plate 102 and the display 101. The front plate 102 and the display 101 may be coupled without an air gap through the optically transparent adhesive member 360. The optically transparent adhesive member 360 may improve image quality. For example, when assuming there is an air gap between the front plate 102 and the display 101, due to the difference in refractive index between different media (e.g., front plate 102, air gap, and display 101), some of the light output from the display 101 may be reflected and lost without going straight to the front plate 102. The loss of light due to the air gap may blur the image represented through the screen (e.g., an effective area capable of displaying an image in a unit composed of the display 101 and the front plate 102), resulting in deterioration of image quality. When the air gap between the front plate 102 and the display 101 is substantially absent due to the optically transparent adhesive member 360, the difference in refractive index between the optically transparent adhesive member 360 and the medium layer in contact therewith may be minimized. When the refractive index difference between the optically transparent adhesive member 360 and the medium layer in contact therewith is minimized, the reflectance of the interface between the optically transparent adhesive member 360 and the medium layer in contact therewith may be lowered. When the reflectance of the interface between the optically transparent adhesive member 360 and the medium layer in contact therewith is lowered, as it is possible to reduce reflection at the interface and loss of light due to this, a clear image can be represented through the screen. The optically transparent adhesive member 360 may include an OCA. According to various embodiments, to minimize generation of air bubbles between one surface of the front plate 102 and one surface of the first layer structure 310 facing each other when the display 101 and the front plate 102 are coupled (or bonded), the optically transparent adhesive member 360 may be an adhesive in a liquid form such as OCR or SVR.

According to an embodiment, the display 101 may include an opening 1011 corresponding to the first camera device 105 in FIG. 2. For example, the opening 1011 may include a first opening 314 formed in the first layer structure 310 and a second opening 324 formed in the second layer structure 320. The first opening 314 and the second opening 324 may overlap when viewed from above the front plate 102. The optically transparent adhesive member 360 may include an opening 364 overlapping the opening 1011 of the display 101. The first camera device 105 in FIG. 2 may overlap the opening 1011 of the display 101 and the opening 364 of the transparent adhesive member 360. In a certain embodiment, the opening 1011 of the display 101 and/or the opening 364 of the transparent adhesive member 360 may be omitted. In this case, for example, the opening 1011 of the display 101 may be replaced with a substantially transparent region formed by modifying the pixel structure and/or wiring structure.

According to an embodiment, the front plate 102 may include a first long edge E1, a second long edge E2, a first short edge E3, or a second short edge E4. The first long edge E1 and the second long edge E2 may be positioned on the opposite side of each other and extend parallel to each other. The first short edge E3 and the second short edge E4 may be positioned on the opposite side of each other and extend parallel to each other. The front plate 102 may be formed in a shape including a flat portion 110F and a curved portion (e.g., first regions 110D) bent and extended from the flat portion 110F. The first regions 110D may be formed adjacent to the first long edge E1 and the second long edge E2, and the flat portion 110F may be positioned between the first regions 110D. The first regions 110D may have a curved shape that is seamlessly curved toward the rear plate 111 in FIG. 1B. The corner at which the first long edge E1 and the first short edge E3 are connected, the corner at which the first long edge E1 and the second short edge E4 are connected, the corner at which the second long edge E2 and the first short edge E3 are connected, or the corner at which the second long edge E2 and the second short edge E4 are connected may include a curved edge. The front plate 102 may include, for example, a glass plate or polymer plate including various coating layers. In a certain embodiment, the front plate 102 may have a form in which at least one protective layer or coating layer including a polymer material (e.g., PET (polyester), PI (polyimide), or TPU (thermoplastic polyurethane)) is disposed on a glass plate or polymer plate. The display 101 may be attached to the back of the front plate 102 by using the optically transparent adhesive member 360, and may be maintained in a shape corresponding to the front plate 102. For example, the display 101 coupled (or bonded) to the front plate 102 may include curved third regions 110G and 110H corresponding to the first regions 110D of the front plate 102 (see FIG. 3B).

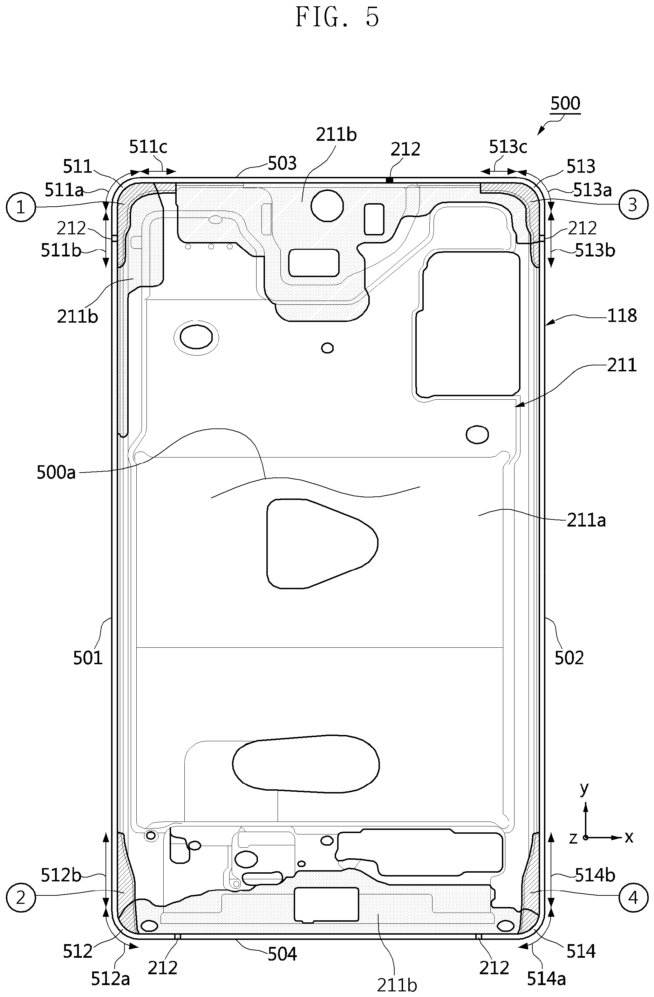

FIG. 5 is a plan view of a case (e.g., front case) 500 including a side bezel structure 118 and a first support member 211 according to an embodiment.

With reference to FIG. 5, in one embodiment, the side bezel structure 118 may include a first side part 501, a second side part 502, a third side part 503, and a fourth side part 504. The first side part 501 and the second side part 502 may be positioned on the opposite side of each other and may be parallel to each other. The third side part 503 may connect one end of the first side part 501 and one end of the second side part 502. The fourth side part 503 may connect the other end of the first side part 501 and the other end of the second side part 502. The third side part 503 and the fourth side part 504 may be positioned on the opposite side of each other and may be parallel to each other. The side bezel structure 118 may include a first corner portion 511 at which the first side part 501 and the third side part 503 are connected, a second corner portion 512 at which the first side part 501 and the fourth side part 504 are connected, a third corner portion 513 at which the second side part 502 and the third side part 503 are connected, and a fourth corner portion 514 at which the second side part 502 and the fourth side part 504 are connected. The first corner portion 511, the second corner portion 512, the third corner portion 513, and/or the fourth corner portion 514 may be formed in a curved shape.

The first support member 211 is disposed inside the electronic device 100 and connected to the side bezel structure 118, or is integrally formed with the side bezel structure 118. The first support member 211 may be made of a metal material and/or a non-metal material (e.g., polymer). In one embodiment, the first support member 211 may include at least one first conductive portion 211a and at least one non-conductive portion 211b connected to the first conductive portion 211a. In one embodiment, the side bezel structure 118 may include a plurality of second conductive portions separated by a cut-off portion therebetween. At least some of the at least one first conductive portion 211a and at least some of the plural second conductive portions may be integrally formed and may include the same metal material. At least one non-conductive portion 211b may be extended to the cut-off portion to form an insulating portion 212 between the plural second conductive portions. The insulating portion 212 may form a part of the side surface 110C (see FIG. 1A). The at least one non-conductive portion 211b may be formed through, for example, insert injection. In a certain embodiment, the insulating portion 212 may be defined as a part of the side bezel structure 118.

According to an embodiment, the display assembly 300 of FIG. 3B or 4 is be disposed on one surface 500a (e.g., the surface facing toward the front plate 102 in FIG. 2) (hereinafter, referred to as "first mounting surface") of the first support member 211. The first substrate assembly 241, the second substrate assembly 242, and the battery 250 in FIG. 2 may be disposed on the other surface (e.g., the surface facing toward the rear plate 111 in FIG. 2) (e.g., "second mounting surface") of the first support member 211.

According to an embodiment, the first mounting surface 500a may include a first recess ① formed on the side of the first corner portion 511, a second recess ② formed on the side of the second corner portion 512, a third recess ③ formed on the side of the third corner portion 513, or a fourth recess ④ formed on the side of the fourth corner portion 514. The first recess ①, the second recess ②, the third recess ③, or the fourth recess ④ may be, for example, a groove or space formed in a direction from the front plate 102 in FIG. 2 toward the rear plate 111 in FIG. 2.

For example, the first recess ① may include a first portion 511a positioned adjacent to the first corner portion 511. The first portion 511a may be curved along the first corner portion 511 when viewed from above the first mounting surface 500a. The first recess ① may further include an extension portion 511b extended from the first portion 511a and positioned adjacent to the first side part 501. The first recess ① may further include an extension portion 511c extended from the first portion 511a and positioned adjacent to the third side part 503. The first recess ① may be formed in various other shapes on the side of the first corner portion 511.

For example, the third recess ③ may include a third portion 513a positioned adjacent to the third corner portion 513. The third portion 513a may be curved along the third corner portion 513 when viewed from above the first mounting surface 500a. The third recess ③ may further include an extension portion 513b extended from the third portion 513a and positioned adjacent to the second side part 502. The third recess ③ may further include an extension portion 513c extended from the third portion 513a and positioned adjacent to the third side part 503. The third recess ③ may be formed in various other shapes on the side of the third corner portion 513.

For example, the second recess (2) may include a second portion 512a positioned adjacent to the second corner portion 512. The second recess ② may further include an extension portion 512b extended from the second portion 512a and positioned adjacent to the first side part 501. The second recess ②may be formed in various other shapes on the side of the second corner portion 512.

For example, the fourth recess ④ may include a fourth portion 514a positioned adjacent to the fourth corner portion 514. The fourth recess ④ may further include an extension portion 514b extended from the fourth portion 514a and positioned adjacent to the second side part 502. The fourth recess ④ may be formed in various other shapes on the side of the fourth corner portion 514. In one embodiment, when viewed from above the front plate 102 (see FIG. 2), the first recess ① and/or the second recess ② may at least partially overlap the third region 110G (refer to FIG. 3B) of the display 101. The third recess ③ and/or the fourth recess ④ may at least partially overlap the other third region 110H of the display 101.

According to an embodiment, in the first recess ①, the second recess ②, the third recess ③, or the fourth recess ④, a separation space is formed between the first support member 211 and the display assembly 300 (refer to FIG. 3B). The separation space may be, for example, about 0.5 mm or less, but may be varied without being limited thereto. For example, the first recess ①, the second recess ②, the third recess ③, or the fourth recess ④ may be formed in a shape that is dug to a depth of about 0.1 mm to about 1 mm, but may be varied without being limited thereto. The separation space between the first support member 211 and the display assembly 300 due to the first recess ①, the second recess ②, the third recess ③, or the fourth recess ④prevents the display assembly 300 from being damaged when an external impact is applied to the front plate 102 due to dropping of the electronic device 100 or the like.

For example, when an external impact is applied to the front plate 102 on the side of the first corner portion 511, the separation space between the first support member 211 and the display assembly 300 due to the first recess ① may contribute to preventing the display assembly 300 from being damaged. For example, when an external impact is applied to the front plate 102 on the side of the second corner portion 512, the separation space between the first support member 211 and the display assembly 300 due to the second recess ② may contribute to preventing the display assembly 300 from being damaged. For example, when an external impact is applied to the front plate 102 on the side of the third corner portion 513, the separation space between the first support member 211 and the display assembly 300 due to the third recess ③ may contribute to preventing the display assembly 300 from being damaged. For example, when an external impact is applied to the front plate 102 on the side of the fourth corner portion 514, the separation space between the first support member 211 and the display assembly 300 due to the fourth recess ④ may contribute to preventing the display assembly 300 from being damaged.

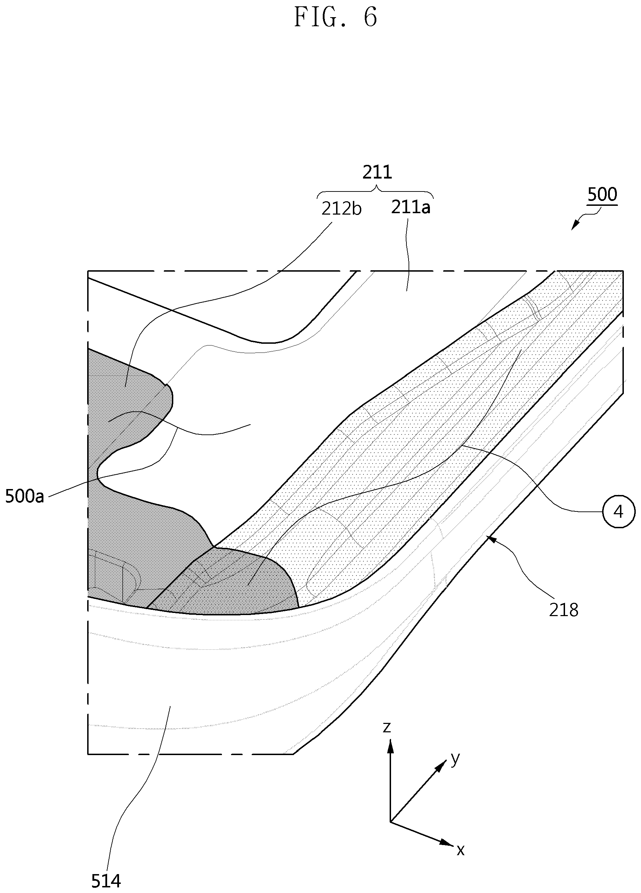

FIG. 6 shows the fourth recess ④ in the case 500 of FIG. 5 according to an embodiment.

With reference to FIG. 6, in one embodiment, the fourth recess ④ may be in the form of a groove or space dug on the side of the fourth corner portion 514 among the first mounting surface 500a. According to an embodiment, the fourth recess ④ may include a region pursuant to at least one first conductive portion 211a of the first support member 211, and a region pursuant to at least one non-conductive portion 211b of the first support member 211. Although not shown, the first recess ① in FIG. 5 may be formed in substantially the same manner as the fourth recess ④, and may be, for example, in the form of a groove or space dug on the side of the first corner portion 511. The second recess ② in FIG. 5 may be formed in substantially the same manner as the fourth recess ④, and may be, for example, in the form of a groove or space dug on the side of the second corner portion 512. The third recess ③ in FIG. 5 may be formed in substantially the same manner as the fourth recess ④, and may be, for example, in the form of a groove or space dug on the side of the third corner portion 513.

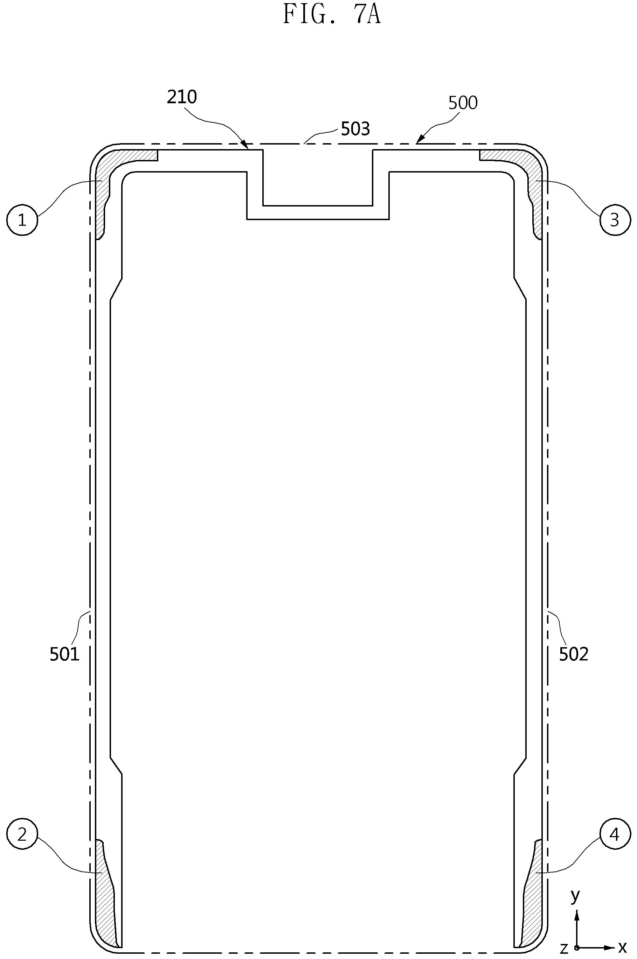

FIG. 7A shows the first adhesive member 210 positioned between the display assembly of FIG. 3B and the case 500 of FIG. 5 according to an embodiment.

With reference to FIG. 7A, in one embodiment, the first adhesive member 210 may be at least partially extended along the first side part 501, the second side part 502, and the third side part 503 of the case 500. When viewed from above the first mounting surface 500a (see FIG. 5), the first adhesive member 210 may at least partially overlap the first recess ①, the second recess ②, the third recess ③, and the fourth recess ④.

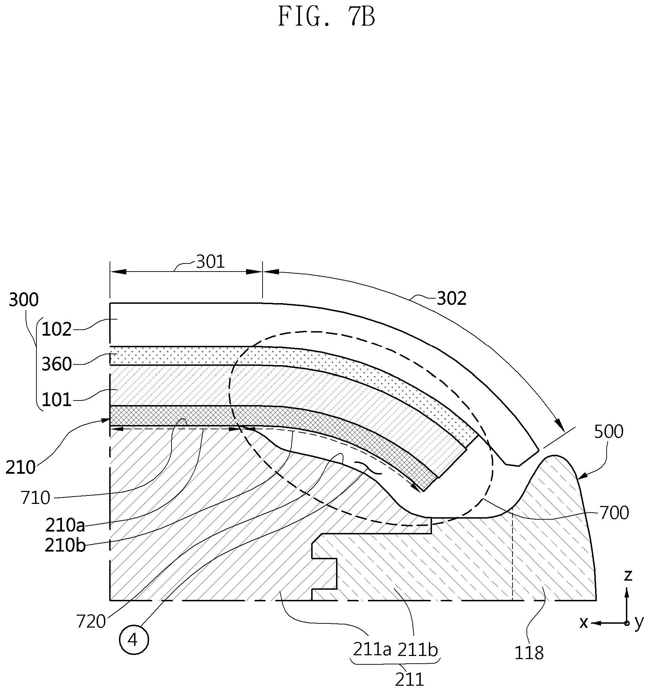

FIG. 7B is a cross-sectional view illustrating a coupling structure between the display assembly 300 and the case 500 according to an embodiment.

The cross-sectional view of FIG. 7B shows a coupling structure between the display assembly 300 and the case 500 at the fourth corner portion 514 in FIG. 5. With reference to FIG. 7B, the display assembly 300 including the front plate 102, the optically transparent adhesive member 360, and the display 101 is disposed on the case 500 by using the first adhesive member 210. The case 500 includes the first support member 211 including at least one first conductive portion 211a and at least one non-conductive portion 211b, and the side bezel structure 118 connected to or integrally formed with the first support member 211.

According to an embodiment, the first adhesive member 210 is positioned between the display assembly 300 and the case 500. For example, a method for coupling (e.g., bonding or attaching) the display assembly 300 and the case 500 may include a first operation of disposing the first adhesive member 210 on one surface 320b (see FIG. 3B) of the display assembly 300, and a second operation of coupling the display assembly 300 to the first mounting surface 500a (refer to FIG. 5 or 6) of the case 500 by using the first adhesive member 210.

According to an embodiment, the display assembly 300 includes a flat portion 301 and a curved portion 302 bent and extended from the flat portion 301. For example, the curved portion 302 may include the curved third regions 110G and 110H shown in FIG. 3B.

According to an embodiment, the first mounting surface 500a (refer to FIG. 5 or 6) of the case 500 includes an adhesive surface 710 and a non-adhesive surface 720. The adhesive surface 710 indicates a region for disposing a bonding material for coupling (or bonding) the display assembly 300 and the first support member 211 together. The non-adhesive surface 720 indicates a region for securing a space between the curved portion 302 and the first support member 211, and is formed by the fourth recess ④ according to an embodiment. The adhesive surface 710 and the non-adhesive surface 720 are positioned at different heights with respect to the positive z-axis direction. For example, the non-adhesive surface 720 may be a lower surface than the adhesive surface 710 with respect to the positive z-axis. The gap between the non-adhesive surface 720 and the display 101 is greater than the gap between the adhesive surface 710 and the display 101. The non-adhesive surface 720 is further spaced apart from the display 101 than the adhesive surface 710. In one embodiment, the non-adhesive surface 720 may be implemented in a curved shape along the curved portion 302 of the display assembly 300. In various embodiments, the non-adhesive surface 720 may include an inclined surface in the form of a straight or curved line inclined toward the side bezel structure 118. The first portion 210a of the first adhesive member 210 disposed on the display 101 is positioned on the adhesive surface 710. When viewed from above the front plate 102 (e.g., viewed in negative z-axis direction), the second portion 210b of the first adhesive member 210 is positioned to be spaced apart from the non-adhesive surface 720 with a gap therebetween while at least partially overlapping the non-adhesive surface 720.

According to an embodiment, the adhesive surface 710 is positioned substantially in correspondence to the flat portion 302 of the display assembly 300. For example, the adhesive surface 710 at least partially overlaps the flat portion 302 of the display assembly 300 when viewed from above the front plate 102 (e.g., viewed in negative z-axis direction). The non-adhesive surface 720, or the fourth recess ④ is positioned substantially in correspondence to the curved portion 302 of the display assembly 300. For example, the non-adhesive surface 720 at least partially extends along the curved portion 302 of the display assembly 300. For example, the non-adhesive surface 720 least partially overlaps the curved portion 302 of the display assembly 300 when viewed from above the front plate 102.

Although not shown, the cross-sectional structure for the coupling between the display assembly 300 and the case 500 at the first corner portion 511 in FIG. 5 may be formed based on the first recess ① in a manner substantially the same as or similar to the cross-sectional structure shown in FIG. 7B. Although not shown, the cross-sectional structure for the coupling between the display assembly 300 and the case 500 at the second corner portion 512 in FIG. 5 may be formed based on the second recess ② in a manner substantially the same as or similar to the cross-sectional structure shown in FIG. 7B. Although not shown, the cross-sectional structure for the coupling between the display assembly 300 and the case 500 at the third corner portion 513 in FIG. 5 may be formed based on the third recess ③ in a manner substantially the same as or similar to the cross-sectional structure shown in FIG. 7B.

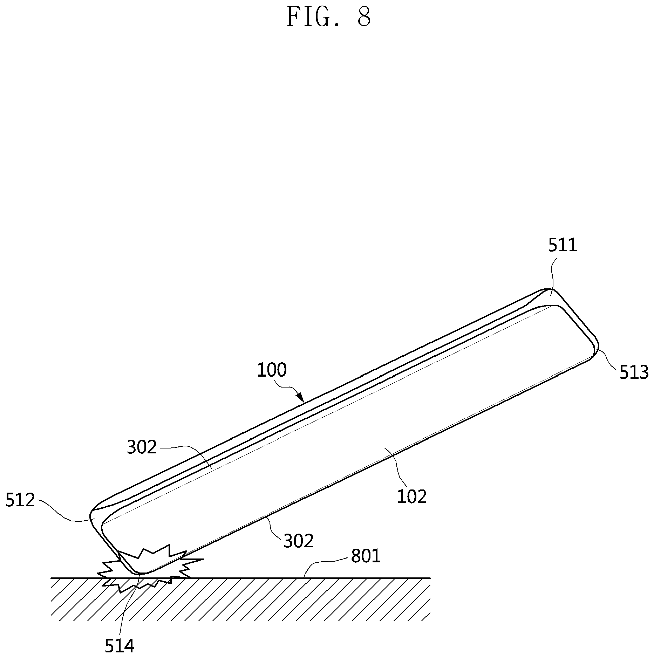

FIG. 8 is a reference exemplarily diagram for explaining an external impact applied to the electronic device 100 according to an embodiment.

With reference to FIG. 8, for example, when the electronic device 100 is dropped with the front plate 102 facing the ground 801, the curved portion 302 of the display assembly 300 (refer to FIG. 7) on the side of the fourth corner portion 514 may collide with the ground 801. With reference to FIGS. 7B and 8, an external impact may be applied to the curved portion 302 of the display assembly 300 on the side of the fourth corner portion 514, but the structure in which the curved portion 302 of the display assembly 300 is spaced apart from the first support member 211 on the side of the fourth corner portion 514 due to the fourth recess ④ (refer to the portion indicated by reference numeral '700' in FIG. 7) may prevent breakage of the display assembly 300 (or, display 101). For example, the structure 700 may mitigate or reduce external impact. When an external impact is applied to the curved portion 302 of the display assembly 300 on the side of the fourth corner portion 514, the curved portion 302 of the display assembly 300 can elastically droop into the space of the fourth recess ④, which may reduce the effect of stress on the breakage of the display assembly 300 (or, display 101). The curved portion 302 of the display assembly 300 is spaced apart from the first support member 211 due to the fourth recess ④, which may reduce the stress effect of the first support member 211 on the curved portion 302 of the display assembly 300 with respect to an external impact. The fourth recess ④ may contribute to mitigating a collision between the display assembly 300 and the first support member 211.

With reference to FIG. 7B, in various embodiments, when an external impact is applied to the curved portion 302 of the display assembly 300 on the side of the fourth corner portion 514, the second portion 210b of the first adhesive member 210 may absorb or mitigate the external impact. For example, when an external impact is applied to the curved portion 302 of the display assembly 300 on the side of the fourth corner portion 514, the curved portion 302 of the display assembly 300 can elastically droop into the space of the fourth recess ④, and the second portion 210b of the first adhesive member 210 may be in contact with the first support member 211. The second portion 210b of the first adhesive member 210 may prevent the display 101 from directly contacting the first support member 211, and thus the stress effect of the first support member 211 on the display 101 can be reduced (e.g., collision mitigation). The first adhesive member 210 may be made of various materials capable of absorbing or mitigating impact while having adhesiveness.

When the electronic device 100 is dropped, the curved portion 302 of the display assembly 300 on the side of the first corner portion 511 may collide with the ground 801 (refer to FIG. 8). The electronic device 100 may include a structure in which the curved portion 302 of the display assembly 300 is spaced apart from the first support member 211 due to the first recess ① (see FIG. 7A) on the side of the first corner portion 511. This structure can alleviate or reduce the external impact, so that damage to the display assembly 300 (or, display 101) on the side of the first corner portion 511 can be prevented.

When the electronic device 100 is dropped, the curved portion 302 of the display assembly 300 on the side of the second corner portion 512 may collide with the ground 801 (refer to FIG. 8). The electronic device 100 may include a structure in which the curved portion 302 of the display assembly 300 is spaced apart from the first support member 211 due to the second recess ② (see FIG. 7A) on the side of the second corner portion 512. This structure can alleviate or reduce the external impact, so that damage to the display assembly 300 (or, display 101) on the side of the second corner portion 512 can be prevented.

When the electronic device 100 is dropped, the curved portion 302 of the display assembly 300 on the side of the third corner portion 513 may collide with the ground 801 (refer to FIG. 8). The electronic device 100 may include a structure in which the curved portion 302 of the display assembly 300 is spaced apart from the first support member 211 due to the third recess ③ (see FIG. 7A) on the side of the third corner portion 513. This structure can alleviate or reduce the external impact, so that damage to the display assembly 300 (or, display 101) on the side of the third corner portion 513 can be prevented.

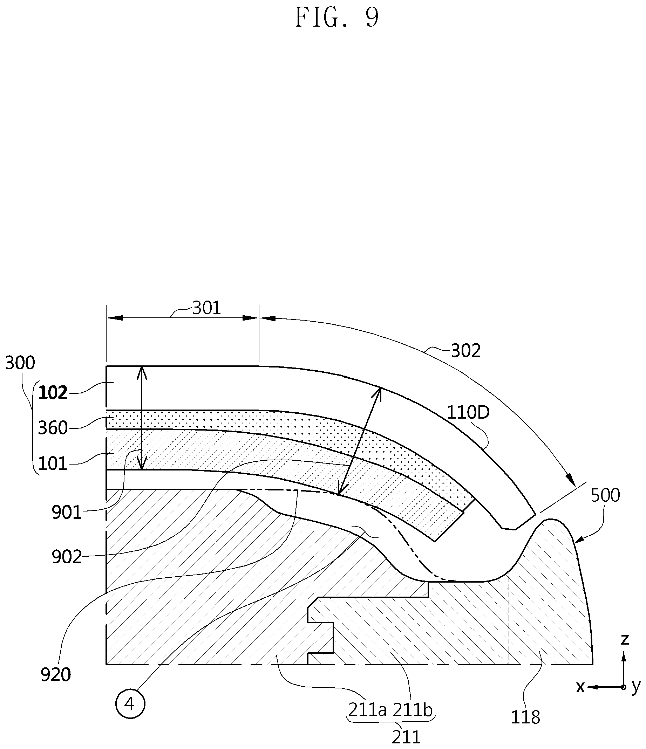

FIG. 9 is a cross-sectional view illustrating a coupling structure between the display assembly 300 and the case 500 according to another embodiment.

The cross-sectional view of FIG. 9 shows a coupling structure between the display assembly 300 and the case 500 at the fourth corner portion 514 in FIG. 5. A repeated description of some reference symbols in FIG. 9 will be omitted. Although not shown in FIG. 9, an adhesive member (e.g., first adhesive member 210 in FIG. 2) is positioned at at least a portion between the display assembly 300 and the first support member 211. With reference to FIG. 9, in one embodiment, the display assembly 300 has a first thickness 901 in the flat portion 301, and has a second thickness 902 greater than the first thickness 901 in at least some of the curved portion 302. The front plate 102 may include a curved first region 110D corresponding to the curved portion 302. For example, the optically transparent adhesive member 360 may be not formed to have a substantially even thickness in the flat portion 301 and the curved portion 302 of the display assembly 300, and thus a difference between the first thickness 901 and the second thickness 902 may occur. The difference between the first thickness 901 and the second thickness 902 may be caused by various factors involved in the bonding process, such as elasticity of the display 101 or curing conditions of the optically transparent adhesive member 360. The curved portion 302 of the display assembly 300 may become thicker in comparison to the embodiment of FIG. 7B due to factors in the manufacturing process, but, a space between the curved portion 302 of the display assembly 300 and the first support member 211 is secured due to the fourth recess ④. Even if there is a difference between the first thickness 901 and the second thickness 902, as there is substantially no effect on the performance (or function) of the display assembly 300, it may be considered as non-defective. Even if the thickness of the curved portion 302 of the display assembly 300 is formed with a deviation within a threshold range, the space between the curved portion 302 of the display assembly 300 and the first support member 211 is secured in advance due to the fourth recess ④. When the fourth recess ④ is not included as shown by a dash double-dotted line (or imaginary line) indicated by reference numeral '920', there is substantially no gap between the curved portion 302 of the display assembly 300 and the first support member 211, or the display assembly 300 may be unstably coupled to the first support member 211 in a state including stress between the curved portion 302 of the display assembly 300 and the first support member 211. When the fourth recess ④ is omitted as shown by the dash double-dotted line (or imaginary line) indicated by reference numeral '920' (refer to reference numeral '920'), it may be difficult to prevent damage to the display assembly 300 (or, display 101) due to an external impact.

With reference to FIG. 7B, for example, when an external impact is applied to the curved portion 302 of the display assembly 300 on the side of the fourth corner portion 514, the curved portion 302 of the display assembly 300 can elastically droop into the space of the fourth recess ④, and the second portion 210b of the first adhesive member 210 may be in contact with the first support member 211. In this case, there is an adhesive force between the second portion 210b of the first adhesive member 210 and the first support member 211 due to the first adhesive member 210, and stress may be generated in the curved portion 302 of the display assembly 300 due to the adhesive force between the second portion 210b and the first support member 211.

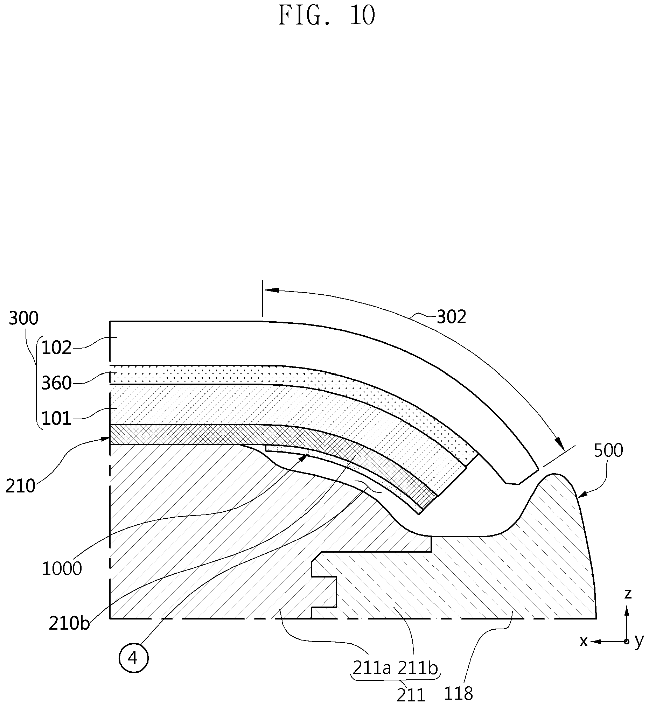

FIG. 10 is a cross-sectional view illustrating a coupling structure between the display assembly 300 and the case 500 according to an optional embodiment.

A repeated description of some reference numerals in FIG. 10 will be omitted. With reference to FIG. 10, compared to the embodiment of FIG. 7B, a non-adhesive member 1000 may be optionally disposed on the first adhesive member 210 in correspondence to the curved portion 302 of the display assembly 300. In one optional embodiment, the non-adhesive member 1000 is implemented as a non-adhesive layer disposed on the first adhesive member 210. For example, the non-adhesive member 1000 may include a non-adhesive film.

The curved portion 302 of the display assembly 300 may droop into the space of the fourth recess ④ due to an external impact, and the non-adhesive member 1000 may be in contact with the first support member 211. The non-adhesive member 1000 may prevent the adhesive surface formed on the second portion 210b of the first adhesive member 210 (e.g., double-sided tape) from contacting the first support member 211. The non-adhesive member 1000 may be implemented with various non-adhesive materials. The non-adhesive member 1000 may also serve to prevent the curved portion 302 of the display assembly 300 from excessively drooping toward the first support member 211.

For example, when the non-adhesive member 1000 is omitted, a sound may be generated as the adhesive surface included in the second portion 210b of the first adhesive member 210 attaches to and detaches from the first support member 211 due to elasticity of the display assembly 300 in response to an external impact. In one embodiment, the non-adhesive member 1000 may prevent generation of such a sound.

According to a certain optional embodiment, the non-adhesive member 1000 may be made of various materials capable of absorbing or alleviating an impact. The non-adhesive member 1000 may include, for example, a buffering member (e.g., cushioning member) or a flexible member.

According to a certain optional embodiment, the non-adhesive member 1000 may be implemented in the form of being filled in the space between the first adhesive member 210 and the first support member 211.

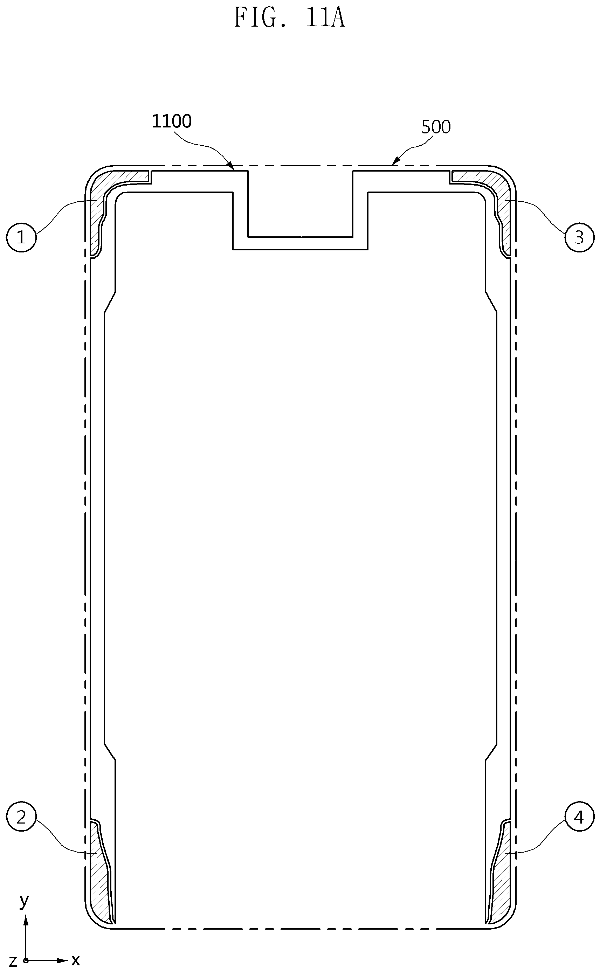

FIG. 11A illustrates a first adhesive member 1100 positioned between the display assembly 300 and the case 500 according to another optional embodiment.

With reference to FIG. 11A, compared with the first adhesive member 210 in FIG. 7A, the first adhesive member 1100 is implemented so as not to overlap with the first recess ①, second recess ②, third recess ③, and fourth recess ④.

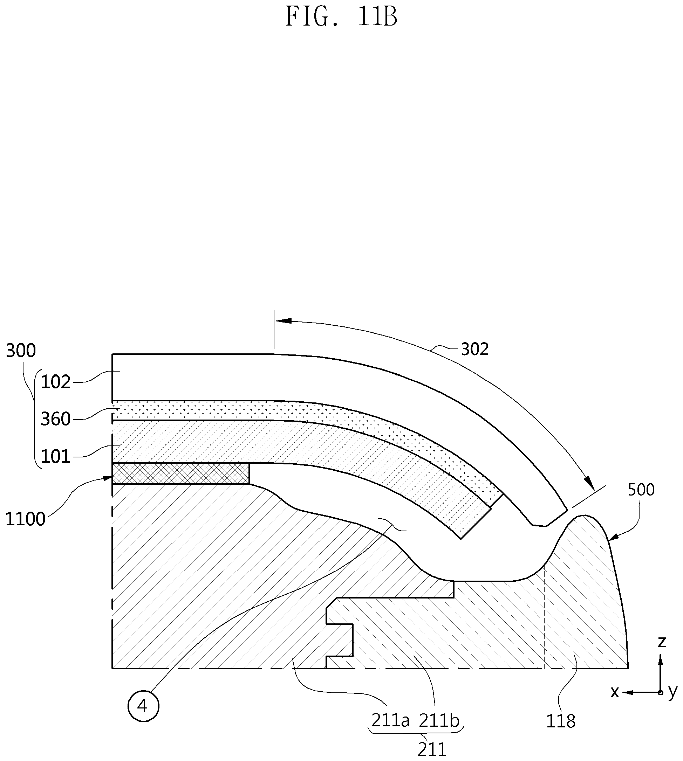

FIG. 11B is a cross-sectional view illustrating a coupling structure between the display assembly 300 and the case 500 by using the first adhesive member 1100 of FIG. 11A according to an optional embodiment.

With reference to FIG. 11B, for example, compared to the embodiment of FIG. 7B, the first adhesive member 1100 is implemented in a form in which the second portion 210b (see FIG. 7B) is omitted. Compared to the embodiment of FIG. 7B, due to the first adhesive member 1100 according to the embodiment of FIG. 11A, a space is further secured between the curved portion 302 of the display assembly 300 and the first support member 211. When the curved portion 302 of the display assembly 300 droops toward the first support member 211 due to an external impact, this may prevent the curved portion 302 of the display assembly 300 from colliding with the first support member 211 or may contribute to mitigating a collision between the curved portion 302 of the display assembly 300 and the first support member 211.

In the embodiment of FIG. 7B, a sound may be generated as the adhesive surface included in the second portion 210b of the first adhesive member 210 attaches to and detaches from the first support member 211 due to elasticity of the display assembly 300 in response to an external impact. In one embodiment, the embodiment of FIG. 11B may prevent generation of such a sound.

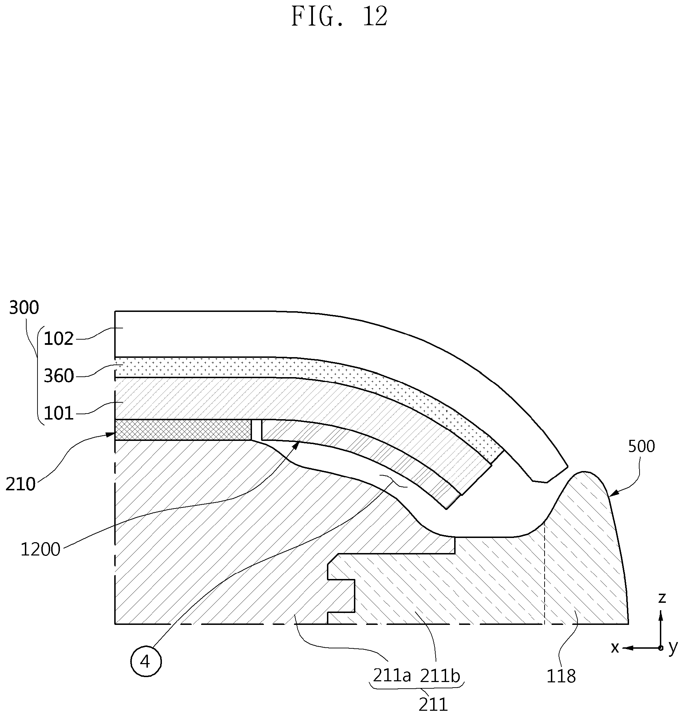

FIG. 12 is a cross-sectional view illustrating a coupling structure between the display assembly 300 and the case 500 according to various optional embodiments.

A repeated description of some reference numerals in FIG. 12 will be omitted. With reference to FIG. 12, compared with the embodiment of FIG. 11B, a buffering member (or, cushioning member) 1200 may be, optionally, provided on the display 101 in correspondence to the curved portion 302 of the display assembly 300. When the curved portion 302 of the display assembly 300 droops toward the first support member 211 due to an external impact, the buffering member 1200 may be in contact with the first support member 211. The buffering member 1200 may be made of various materials capable of absorbing or alleviating an external impact. The buffering member 1200 may buffer (or alleviate) the stress effect that the first support member 211 has on the display assembly 300 (or, display 101) in response to an external impact. The buffering member 1200 may include, for example, various elastic members or flexible members. In a certain optional embodiment, the buffering member 1200 may also serve to prevent the curved portion 302 of the display assembly 300 from excessively drooping toward the first support member 211.

According to a certain optional embodiment, the buffering member 1200 may make the inside of the electronic device 100 invisible (e.g., masking).

According to a certain optional embodiment, the buffering member 1200 may be implemented in a form that is filled in the space between the display 101 and the first support member 211. In some cases, the buffering member 1200 may be filled in the space between the display 101 and the first support member 211, and may be in contact with both the display 101 and the first support member 211.

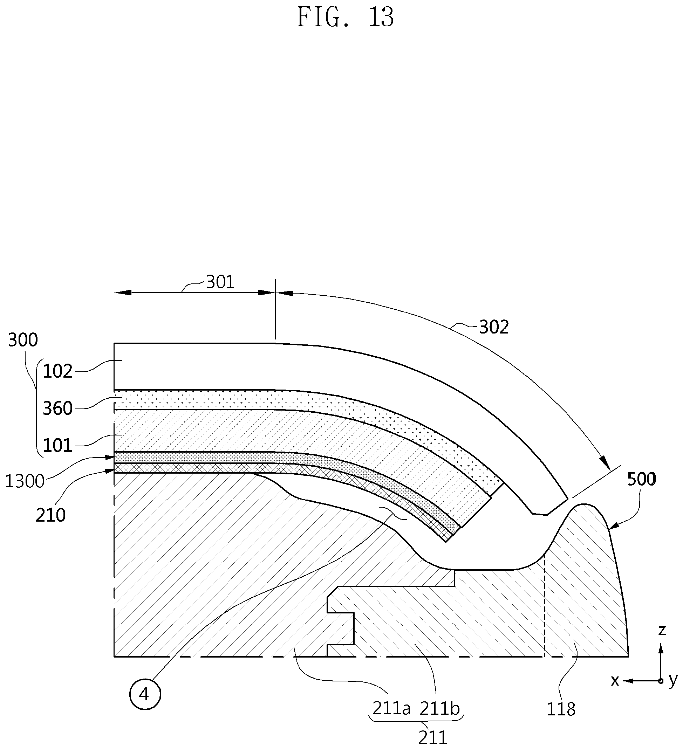

FIG. 13 is a cross-sectional view illustrating a coupling structure between the display assembly 300 and the case 500 according to another optional embodiment.

A repeated description of some reference numerals in FIG. 13 will be omitted. With reference to FIG. 13, compared to the embodiment of FIG. 7B, a buffering member (e.g., cushion member) 1300 may be, optionally, positioned between the first adhesive member 210 and the display 101. The buffering member 1300 may be extended from the flat portion 301 of the display assembly 300 to the curved portion 302 of the display assembly 300. The buffering member 1300 may improve elasticity of the display assembly 300. The buffering member 1300 may reduce the stress effect of the first support member 211 on the display assembly 300 (or, display 101) in response to an external impact. The buffering member 1300 may be implemented with various materials capable of absorbing or alleviating an impact. The buffering member 1300 may include various elastic members or flexible members. In one embodiment, the buffering member 1300 may include a PET layer. The buffer member 1300 may be implemented with various other materials such as polyimide (PI) or a sponge.

According to various optional embodiments, a buffering member capable of absorbing or alleviating an impact may be positioned in the second layer structure 320 (refer to FIG. 4) of the display 101. The position or number of buffering members in the second layer structure 320 may be varied.

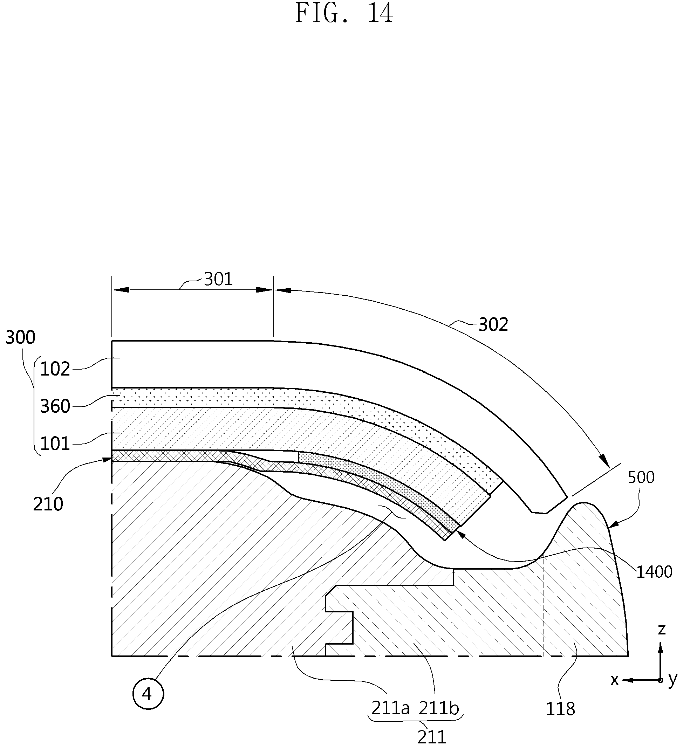

FIG. 14 is a cross-sectional view illustrating a coupling structure between the display assembly 300 and the case 500 according to another optional embodiment.

A repeated description of some reference numerals in FIG. 14 will be omitted. With reference to FIG. 14, compared with the embodiment of FIG. 13, a buffering member 1400 may be, optionally, positioned between the first adhesive member 210 and the display 101 in correspondence to the curved portion 302 of the display assembly 300. The buffer member 1400 may be not positioned in correspondence to the flat portion 301 of the display assembly 300. The buffering member 1400 may improve elasticity with respect to the curved portion 302 of the display assembly 300. The buffering member 1400 may reduce the stress effect of the first support member 211 on the display assembly 300 (or, display 101) in response to an external impact. The buffer member 1400 may be implemented with various materials capable of absorbing or alleviating an impact. The buffering member 1400 may include various elastic members or flexible members. In one embodiment, the buffering member 1400 may be implemented with various polymer materials such as PET or PI. In a certain embodiment, the buffering member 1400 may make the inside of the electronic device 100 invisible (e.g., masking).

According to various optional embodiments (not shown), a non-adhesive material may be disposed on one surface (e.g., non-adhesive surface 720 in FIG. 7B) of the support member 211 facing the curved portion 302 of the display assembly 300. The non-adhesive material may prevent the first adhesive member 210 from contacting the first support member 211 when the curved portion 302 is bent due to an external impact. According to various optional embodiments, when the non-adhesive material is not disposed on the non-adhesive surface 720 of the support member 211, a sound may be generated as the adhesive surface of the first adhesive member 210 attaches to and detaches from the first support member 211 due to elasticity of the display assembly 300 in response to an external impact. The non-adhesive material can prevent the generation of such a sound.

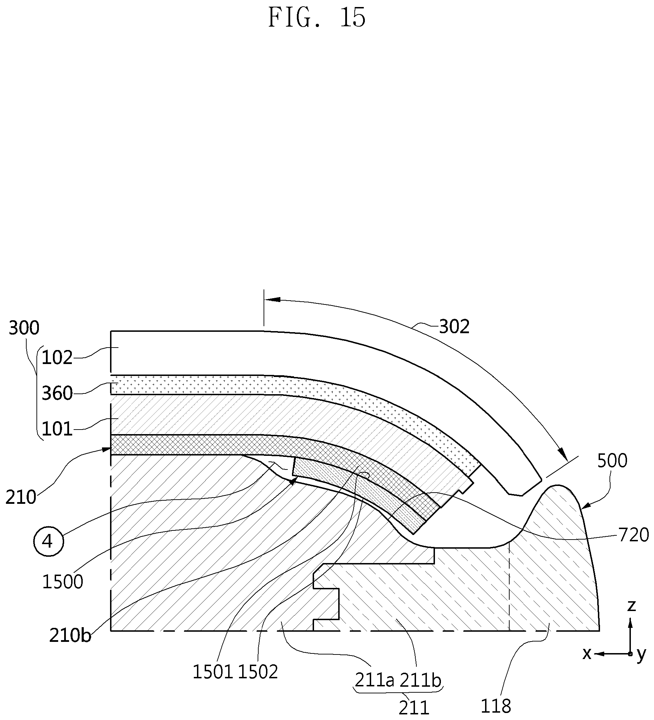

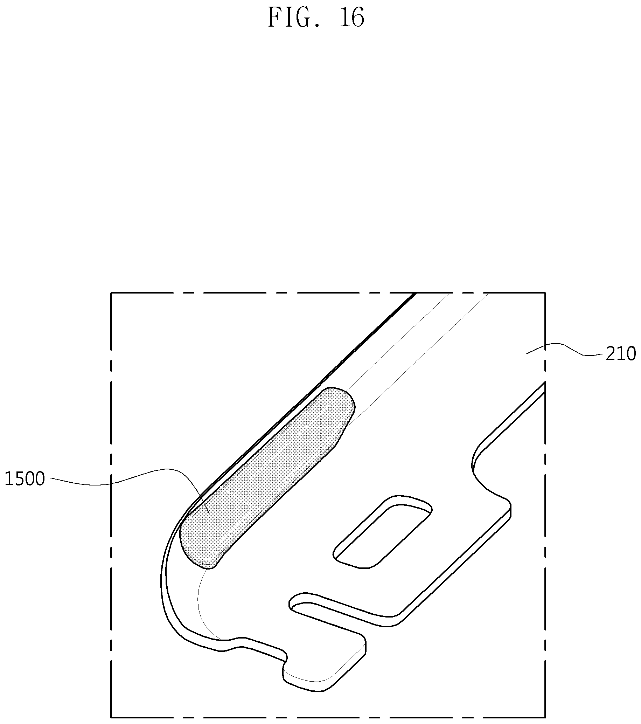

FIG. 15 is a cross-sectional view illustrating a coupling structure between the display assembly 300 and the case 500 according to another optional embodiment. FIG. 16 shows the first adhesive member 210 and a display support member 1500 in relation to, for example, the optional embodiment of FIG. 15.

A repeated description of some reference numerals in FIG. 15 will be omitted. With reference to FIGS. 15 and 16, compared with the embodiment of FIG. 7B, a display support member 1500 may be, optionally, disposed on the first adhesive member 210 in correspondence to the curved portion 302 of the display assembly 300. In one optional embodiment, the display support member 1500 may contribute to maintaining the display 101 in a shape corresponding to the curved portion 302 of the display assembly 300.

The display support member 1500 may include, for example, a metal material or a non-metal material (e.g., polymer). In one embodiment, the display support member 1500 may be formed through various methods such as injection molding, die casting, press working, or thermoforming.

According to an optional embodiment, the display support member 1500 may be positioned to be spaced apart from the non-adhesive surface 720 of the first support member 211.

According to an optional embodiment, the display support member 1500 may be made of a non-adhesive member. The curved portion 302 of the display assembly 300 may droop into the space of the fourth recess ④ due to an external impact, and the display support member 1500 may be in contact with the first support member 211. The display support member 1500 may prevent the adhesive surface formed on the second portion 210b of the first adhesive member 210 (e.g., double-sided tape) from contacting the first support member 211. The display support member 1500 may serve to prevent the curved portion 302 of the display assembly 300 from excessively drooping toward the first support member 211.

For example, if the display support member 1500 is omitted, a sound may be generated as the adhesive surface included in the second portion 210b of the first adhesive member 210 attaches to and detaches from the first support member 211 due to elasticity of the display assembly 300 in response to an external impact. In one optional embodiment, the display support member 1500 can prevent the generation of such a sound.

According to a certain optional embodiment, the display support member 1500 may absorb or alleviate an impact. The display support member 1500 may include a buffer material. In a certain optional embodiment, the display support member 1500 may be implemented with a plurality of layers. Some of the plural layers included in the display support member 1500 may be substantially rigid, and some other layers included in the display support member 1500 may include a buffer material or a flexible material. For example, among the plural layers included in the display support member 1500, the layer forming the one surface 1501 of the display support member 1500 facing the first adhesive member 210 may include a buffer material or a flexible material. As another example, among the plural layers included in the display support member 1500, the layer forming the other surface 1502 of the display support member 1500 facing the non-adhesive surface 720 of the first support member 211 may include a buffer material or a flexible material.

According to an optional embodiment, the display support member 1500 may be positioned to be spaced apart from the non-adhesive surface 720 of the first support member 211. The separation space between the display support member 1500 and the non-adhesive surface 720 of the first support member 211 may contribute to reducing damage to the display assembly 300 (or, display 101) when an external impact is applied to the front plate 102 due to dropping of the electronic device 100 or the like. For example, when an external impact is applied to the curved portion 302 of the display assembly 300, the curved portion 302 of the display assembly 300 may droop in a separation space between the display support member 1500 and the non-adhesive surface 720 of the first support member 211, which can reduce the effect of stress on the breakage of the display assembly 300 (or, display 101). The separation space between the display support member 1500 and the non-adhesive surface 720 of the first support member 211 may contribute to mitigating a collision between the display assembly 300 (or, display 101) and the first support member 211 against an external impact.

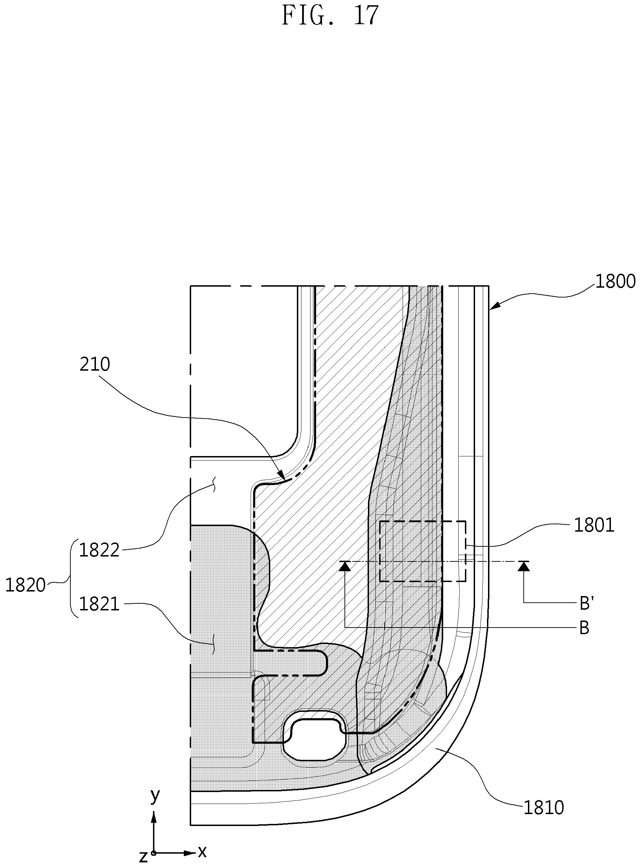

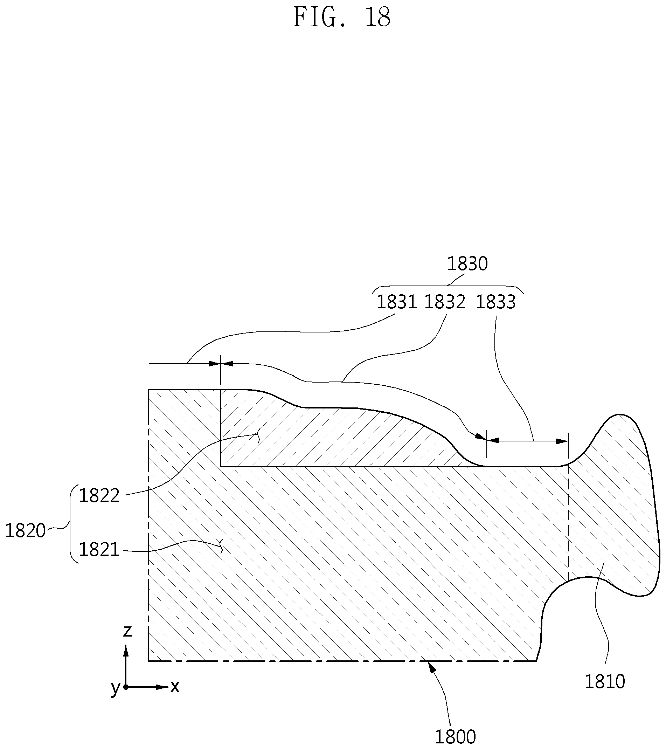

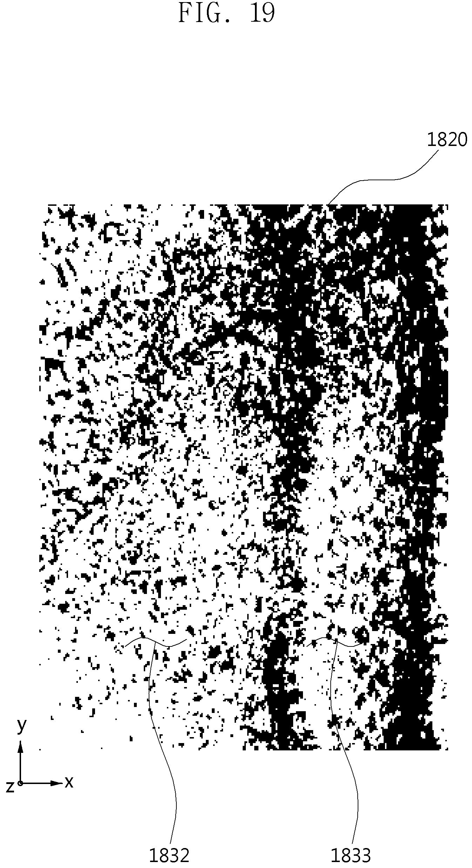

FIG. 17 illustrates the case 500 and first adhesive member 210 in another claimed embodiment. FIG. 18 is a cross-sectional view taken along line B-B' in, for example, FIG. 17. FIG. 19 is a plan view of, for example, a portion indicated by reference numeral 1801 in FIG. 17.

With reference to FIGS. 17, 18 and 19, the case 1800 may include a side bezel structure 1810 (e.g., side bezel structure 118 in FIG. 2) and a first support member 1820 (e.g., first support member 211 in FIG. 2). The first support member 1820 may include at least one first conductive portion 1821 and at least one non-conductive portion 1822. The at least one first conductive portion 1821 may be integrally formed with at least some of the side bezel structure 1810. The cross-sectional view shown in FIG. 18 shows, for example, the fourth recess ④.

According to an embodiment, the first mounting surface 1830 (e.g., first mounting surface 500a in FIG. 5) of the first support member 1820 on which the display assembly 300 (see FIG. 4) is disposed may include a first region 1831, a second region 1832, and a third region 1833. The first region 1831 may indicate a region used to dispose a bonding material (e.g., first adhesive member 210) for coupling the display assembly 300 (refer to FIG. 4) and the first support member 1820. The second region 1832 and the third region 1833 are a non-adhesive surface (e.g., non-adhesive surface 720 in FIG. 7B) for securing a space between the curved portion 302 (e.g., see FIG. 7B) of the display assembly 300 and the first supporting member 1820, and may be formed by the fourth recess ④ according to an embodiment.

According to an embodiment, the second region 1832 may be formed by at least one non-conductive portion 1822. The first region 1831 and/or the third region 1833 may be formed by at least one conductive portion 1821. In a certain embodiment, the third region 1833 may be formed by at least one non-conductive portion 1822. For example, the at least one non-conductive portion 1822 may include various polymers such as an engineering plastic (e.g., polycarbonate (PC) or polymethyl methacrylate (PMMA)). As another example, the at least one non-conductive portion 1822 may include a material (e.g. fiber reinforced plastic (FRP)) formed by mixing an engineering plastic with various reinforcing materials such as glass fiber or carbon fiber. In one embodiment, the second region 1832 and/or the third region 1833 is formed by polymer processing rather than metal processing to have a smooth surface roughness. This smooth surface roughness contributes to reducing damage to the display assembly 300 (or, display 101) when the curved portion 302 (e.g., see FIG. 7B) of the display assembly 300 elastically droops into the space of the fourth recess ④ due to an external impact.

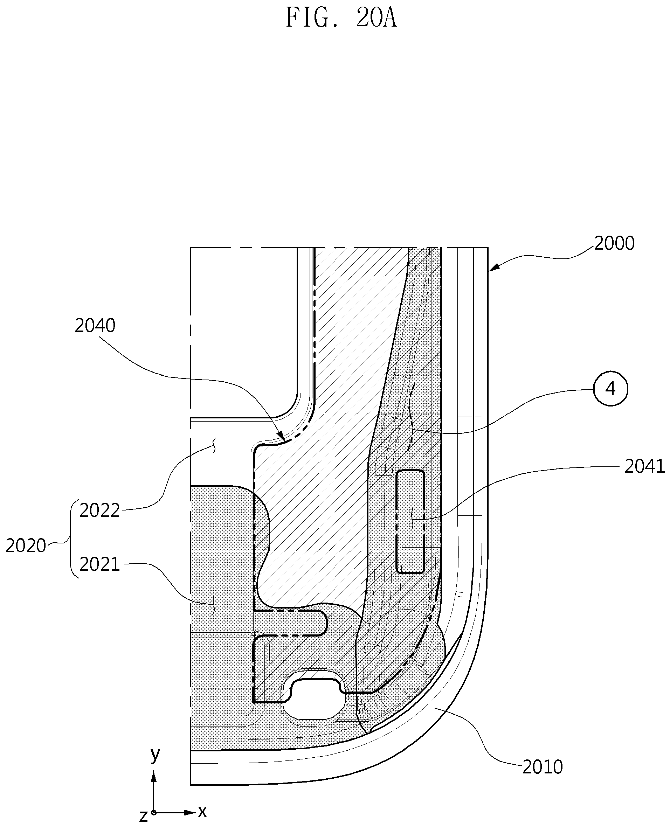

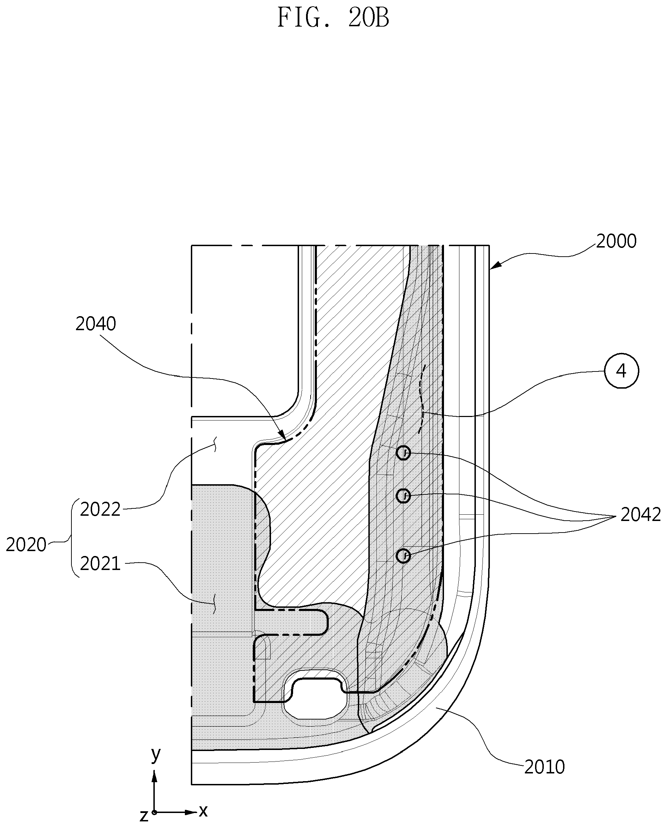

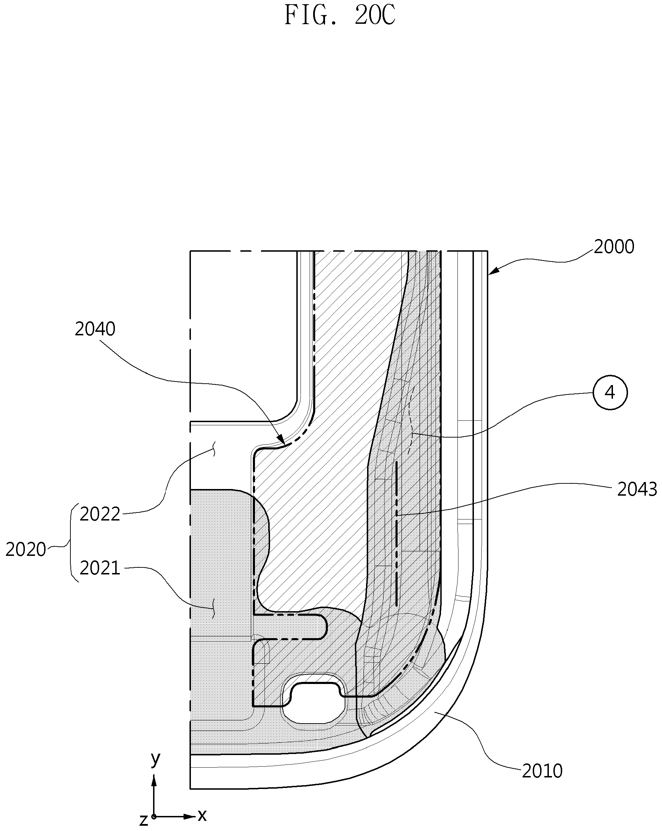

FIG. 20A, 20B or 20C illustrates a case 2000 and a first adhesive member 2040 according to another optional embodiment.

With reference to FIG. 20A, 20B or 20C, the case 2000 includes a side bezel structure 2010 (e.g., side bezel structure 118 in FIG. 2) and a first support member 2020 (first support member 211 in FIG. 2). The first support member 2020 may include at least one first conductive portion 2021 and at least one non-conductive portion 2022. The cross-sectional views shown in FIGS. 20A, 20B and 20C show, for example, the fourth recess ④. In one embodiment, at least one opening may be formed in the portion (e.g., second portion 210b in FIG. 7B) of the first adhesive member 2040 (e.g., first adhesive member 210 in FIG. 2) disposed on the curved portion (e.g., curved portion 302 in FIG. 7B) of the display assembly 300. For example, with reference to FIG. 20A or 20B, at least one opening may be formed in a shape of a through penetration 2041 or 2042. As another example, with reference to FIG. 20C, the at least one opening may be formed in a shape of an incision 2043. The at least one opening may be formed in various other shapes. When the first adhesive member 2040 is disposed on the curved portion 302 of the display assembly 300 corresponding to the fourth recess ④, the at least one opening 2041, 2042 or 2043 may contribute to adhesion by reducing air bubbles between the first adhesive member 2040 and the curved portion 302 of the display assembly 300. When the display 101 (see FIG. 7B) is bent in correspondence to the curved portion 302 of the display assembly 300 to be coupled to the front plate 102 (see FIG. 7B), the at least one opening 2041, 2042 or 2043 may contribute to securing bending characteristics of the display 101.

According to an embodiment of the disclosure, the electronic device (e.g., electronic device 100 in FIG. 1A) may include a housing (e.g., housing 110 in FIG. 1A). The housing may include a front plate (e.g., front plate 102 in FIG. 7B) including a flat portion (e.g., flat portion 301 in FIG. 7B) and a curved portion (e.g., curved portion 302 in FIG. 7B) extended from the flat portion. The housing may include a rear plate (e.g., rear plate 111 in FIG. 2) facing in a direction opposite to the front plate. The housing may include a side member (e.g., side member 118 in FIG. 7B) that surrounds a space between the front plate and the rear plate. The electronic device may include a support member (e.g., first support member 211 in FIG. 7B) positioned in the space and connected to the side member. The electronic device may include a flexible display (e.g., display 101 in FIG. 7B) that is positioned between the support member and the front plate in the space and is visually exposed through the front plate. The electronic device may include an adhesive member (e.g., first adhesive member 210 in FIG. 7B) positioned between the flexible display and the support member. One surface (e.g., mounting surface 500a in FIG. 5 or 6) of the support member facing the flexible display may include a first surface (e.g., adhesive surface 710 in FIG. 7B) that at least partially overlaps the flat portion when viewed from above the front plate and is coupled to the flexible display through the adhesive member. The one surface (e.g., mounting surface 500a in FIG. 5 or 6) of the support member facing the flexible display may include a second surface (e.g., non-adhesive surface 720 in FIG. 7B) that at least partially overlaps the curved portion when viewed from above the front plate and is positioned to be spaced apart from the flexible display by a second distance greater than a first distance by which the first surface is spaced apart from the flexible display.

According to an embodiment of the disclosure, the adhesive member (e.g., first adhesive member 210 in FIG. 7B) may at least partially overlap the second surface (e.g., non-adhesive surface 720 in FIG. 7B) when viewed from above the front plate.

According to an embodiment of the disclosure, the adhesive member (e.g., first adhesive member 210 in FIG. 7B) may be spaced apart from the second surface (e.g., non-adhesive surface 720 in FIG. 7B) and positioned on the flexible display (e.g., display 101 in FIG. 7B).

According to an embodiment of the disclosure, the adhesive member (e.g., first adhesive member 210 in FIG. 7B) may include a buffer material.

According to an embodiment of the disclosure, the electronic device may include a non-adhesive material (e.g., member 1000 in FIG. 10) that is positioned on the adhesive member (e.g., first adhesive member 210 in FIG. 10) to face the second surface (e.g., non-adhesive surface 720 in FIG. 7B).

According to an embodiment of the disclosure, the adhesive member (e.g., adhesive member 1100 in FIG. 11B) may not overlap the second surface (e.g., non-adhesive surface 720 in FIG. 7B) when viewed from above the front plate (e.g., front plate 102 in FIG. 11B).

According to an embodiment of the disclosure, the electronic device may further include a buffering member (e.g., member 1200 in FIG. 12) that is positioned on the flexible display (e.g., display 101 in FIG. 12) to face the second surface (e.g., non-adhesive surface 720 in FIG. 7B).

According to an embodiment of the disclosure, the second surface (e.g., non-adhesive surface 720 in FIG. 7B) may include a curved surface along the curved portion (e.g., curved portion 302 in FIG. 7B).

According to an embodiment of the disclosure, the front plate (e.g., front plate 102 in FIG. 3A or 3B) may include non-parallel first edge (e.g., second long edge E2 in FIG. 3B) and second edge (e.g., second short edge E4 in FIG. 3B), and a corner connecting the first edge and the second edge. The second surface (e.g., non-adhesive surface 720 in FIG. 7B) may be at least partially formed along the corner.

According to an embodiment of the disclosure, the adhesive member (e.g., first adhesive member 210 in FIG. 2) may be at least partially extended along an edge of the flexible display (e.g., display 201 in FIG. 2).

According to an embodiment of the disclosure, the electronic device may further include an optically transparent adhesive member (e.g., optically transparent adhesive member 360 in FIG. 3A) positioned between the front plate (e.g., front plate 102 in FIG. 3A) and the flexible display (e.g., display 101 in FIG. 3A).

According to an embodiment of the disclosure, the optical adhesive member (e.g., optically transparent adhesive member 360 in FIG. 9) may have a greater thickness at the curved portion (e.g., curved portion 302 in FIG. 9) than at the flat portion (e.g., flat portion 301 in FIG. 9).

According to an embodiment of the disclosure, the second surface (e.g., non-adhesive surface 720 in FIG. 7B) may include a region pursuant to a conductive portion (e.g., inner conductive portion 211a in FIG. 6) of the support member (e.g., first support member 211 in FIG. 6) and a region pursuant to a non-conductive portion (e.g., non-conductive portion 211b in FIG. 6) of the support member.

According to an embodiment of the disclosure, the electronic device (e.g., electronic device 100 of FIG. 1A) may include a front plate (e.g., front plate 102 in FIG. 7B), a rear plate (e.g., rear plate 111 in FIG. 2) facing in a direction opposite to the front plate, and a side member (e.g., side member 118 in FIG. 7B) at least partially surrounding a space between the front plate and the rear plate. The side member may include a first side surface (e.g., first side surface 501 in FIG. 5) having a first length, a second side surface (e.g., second side surface 502 in FIG. 5) parallel to the first side surface and having the first length, a third side surface (e.g., third side surface 503 in FIG. 5) having a second length greater than the first length, and a fourth side surface (e.g., fourth side surface 504 in FIG. 5) parallel to the third side surface and having the second length. The electronic device may include a display (e.g., display 101 in FIG. 7B) that is positioned in the space and is visually exposed through the front plate. The display may include a flat portion (e.g., flat portion 301 in FIG. 7B). The display may include a first curved portion (e.g., third region 110F in FIG. 3B) extended from the flat portion and bent toward the first side surface. The display may include a second curved portion (e.g., third region 110F in FIG. 3B) that is extended from the flat portion and bent toward the second side surface and is positioned on the opposite side of the first curved portion with the flat portion interposed therebetween. The electronic device may include a support member (e.g., first support member 211 in FIG. 5) connected to the side member and positioned between the front plate and the display. The support member may include a first surface (e.g., adhesive surface 710 in FIG. 7B) that at least partially overlaps the flat portion when viewed from above the front plate. The support member may include a second surface (e.g., non-adhesive surface 720 in FIG. 7B) that is at least partially formed along a first corner at which the first side surface and the third side surface are connected, a second corner at which the first side surface and the fourth side surface are connected, a third corner at which the second side surface and the third side surface are connected, or a fourth corner at which the second side surface and the fourth side surface are connected. The second surface may be positioned to be spaced apart from the display by a second distance greater than a first distance by which the first surface is spaced apart from the display.

According to an embodiment of the disclosure, the electronic device may include an adhesive member (e.g., first adhesive member 210 in FIG. 7B) positioned between the display (e.g., display 101 in FIG. 7B) and the support member (e.g., support member 211 in FIG. 7B). The first surface (e.g., adhesive surface 710 in FIG. 7B) may be coupled to the display through the adhesive member. The second surface (e.g., non-adhesive surface 720 in FIG. 7B) may be positioned to be spaced apart from the display.

According to an embodiment of the disclosure, the adhesive member (e.g., first adhesive member 210 in FIG. 7B) may at least partially overlap the second surface (e.g., non-adhesive surface 720 in FIG. 7B) when viewed from above the display (e.g., display 101 in FIG. 7B), and may be positioned on the display to be spaced apart from the second surface.

According to an embodiment of the disclosure, the electronic device may include a non-adhesive material (e.g., member 1000 in FIG. 10) positioned on the adhesive member to face the second surface.

According to an embodiment of the disclosure, the adhesive member (e.g., first adhesive member 210 in FIG. 11B) may not overlap the second surface (e.g., non-adhesive surface 720 in FIG. 7B) when viewed from above the front plate (e.g., display 101 in FIG. 7B).

According to an embodiment of the disclosure, the electronic device may further include a buffering member (e.g., member 1200 in FIG. 12) positioned on the display to face the second surface.

According to an embodiment of the disclosure, the adhesive member (e.g., first adhesive member 210 in FIG. 2) may be at least partially extended along an edge of the display (e.g., display 101 in FIG. 7B).

Embodiments of the disclosure disclosed in the present specification and drawings are presented as specific examples to easily explain the technical contents according to the embodiments of the disclosure and help the understanding of the embodiments of the disclosure, and are not intended to limit the scope of the embodiments of the disclosure. Accordingly, the scope of various embodiments of the disclosure should be construed to include both the embodiments disclosed herein and all changes or modifications derived from the technical ideas of the various embodiments of the disclosure.

## Claims

1. An electronic device (100) comprising:
a housing (110) that includes a front plate (102) including a flat portion (301) and a curved portion (302) extended from the flat portion (301), a rear plate (111) facing in a direction opposite to the front plate (102), and a side member (118) surrounding a space between the front plate (102) and the rear plate (111);
a support member (211, 1820, 2020) positioned in the space and connected to the side member (118, 1810, 2010);
a flexible display (101) between the support member (211) and the front plate (102) in the space and visually exposed through the front plate (102);
an adhesive member (210, 1100, 2040) between the flexible display (101) and the support member (211, 1820, 2020),
wherein the support member (211, 1820, 2020) includes:
a first surface (710) that at least partially overlaps the flat portion (301) when viewed from above the front plate (102), faces the flexible display (101), and is coupled to the flexible display (101) through a first portion (210a) of the adhesive member (210, 1100, 2040), and
a second surface (720) that at least partially overlaps the curved portion (302) when viewed from above the front plate (102) and faces the flexible display (101),
charaterised in that
a second portion (210b) of the adhesive member (210, 1100, 2040) is disposed on the flexible display (101) and is positioned to be spaced apart from the second surface (720) while at least partially overlapping the second surface (720), and
a non-adhesive member (1000) disposed on the second portion (210b) of the adhesive member (210) to face the second surface (720) of the support member (211),
wherein the second surface (720) of the support member (211, 1820, 2020) is positioned to be spaced apart from the flexible display (101), by a second distance greater than a first distance by which the first surface (710) of the support member (211, 1820, 2020) is spaced apart from the flexible display (101), to form a separation space between the non-adhesive member (1000) and the second surface (720) of the support member (211, 1820, 2020).

2. The electronic device of claim 1, wherein the non-adhesive member (1000) includes a buffer member.

3. The electronic device of claim 1, wherein the second surface (720) is formed in a curved shape along the curved portion (302).

4. The electronic device of any of the claims 1 to 3, wherein:
the front plate (102) includes non-parallel first and second edges (E2, E4), and a corner connecting the first edge (E2) and the second edge (E4); and
the second surface (720) is at least partially formed along the corner.

5. The electronic device of claim 4, wherein the adhesive member (210) is at least partially extended along an edge of the flexible display (101).

6. The electronic device of claim 1, wherein the optically transparent adhesive member (360) has a greater thickness at the curved portion than at the flat portion.

7. The electronic device of any of the claims 1 to 6, wherein the second surface (720) includes a region pursuant to a conductive portion (211a) of the support member (211) and a region pursuant to a non-conductive portion (211b) of the support member (211).

8. The electronic device of any of the claims 1 to 7, further comprising at least one opening (2041, 2042, 2043) in at least a portion of the adhesive member (2040) disposed on the curved portion (302).

9. The electronic device of claim 8, wherein the at least one opening is formed in the shape of a through penetration (2041, 2042) or an incision (2043).

## Patentansprüche

1. Elektronische Vorrichtung (100), umfassend:
ein Gehäuse (110), das eine vordere Platte (102), die einen flachen Abschnitt (301) und einen gekrümmten Abschnitt (302), der sich von dem flachen Abschnitt (301) erstreckt, beinhaltet, eine hintere Platte (111), die in eine Richtung entgegengesetzt zu der vorderen Platte (102) gewandt ist, und ein Seitenelement (118), das einen Raum zwischen der vorderen Platte (102) und der hinteren Platte (111) umgibt, beinhaltet;
ein Trägerelement (211, 1820, 2020), das in dem Raum positioniert und mit dem Seitenelement (118, 1810, 2010) verbunden ist;
eine flexible Anzeige (101) zwischen dem Trägerelement (211) und der vorderen Platte (102) in dem Raum, die visuell durch die vordere Platte (102) freiliegt;
ein Klebeelement (210, 1100, 2040) zwischen der flexiblen Anzeige (101) und dem Trägerelement (211, 1820, 2020),
wobei das Trägerelement (211, 1820, 2020) Folgendes beinhaltet:
eine erste Fläche (710), die den flachen Abschnitt (301) bei Betrachtung von oberhalb der vorderen Platte (102) zumindest teilweise überlappt, der flexiblen Anzeige (101) zugewandt ist und an die flexible Anzeige (101) durch einen ersten Abschnitt (210a) des Klebeelements (210, 1100, 2040) gekoppelt ist, und
eine zweite Fläche (720), die den gekrümmten Abschnitt (302) bei Betrachtung von oberhalb der vorderen Platte (102) zumindest teilweise überlappt und der flexiblen Anzeige (101) zugewandt ist,
**dadurch gekennzeichnet, dass** ein zweiter Abschnitt (210b) des Klebeelements (210, 1100, 2040) auf der flexiblen Anzeige (101) angeordnet und so positioniert ist, dass er von der zweiten Fläche (720) beabstandet ist, während er die zweite Fläche (720) zumindest teilweise überlappt, und
ein nichtklebendes Element (1000), das an dem zweiten Abschnitt (210b) des Klebeelements (210) so angeordnet ist, dass es der zweiten Fläche (720) des Trägerelements (211) zugewandt ist,
wobei die zweite Fläche (720) des Trägerelements (211, 1820, 2020) so positioniert ist, dass sie von der flexiblen Anzeige (101) um einen zweiten Abstand beabstandet ist, der größer als ein erster Abstand ist, um den die erste Fläche (710) des Trägerelements (211, 1820, 2020) von der flexiblen Anzeige (101) beabstandet ist, um einen Trennraum zwischen dem nichtklebenden Element (1000) und der zweiten Fläche (720) des Trägerelements (211, 1820, 2020) auszubilden.

2. Elektronische Vorrichtung nach Anspruch 1, wobei das nichtklebende Element (1000) ein Pufferelement beinhaltet.

3. Elektronische Vorrichtung nach Anspruch 1, wobei die zweite Fläche (720) in einer gekrümmten Form entlang des gekrümmten Abschnitts (302) ausgebildet ist.

4. Elektronische Vorrichtung nach einem der Ansprüche 1 bis 3, wobei:
die vordere Platte (102) eine nichtparallele erste und zweite Kante (E2, E4) und eine Ecke, welche die erste Kante (E2) und die zweite Kante (E4) verbindet, beinhaltet; und
die zweite Fläche (720) zumindest teilweise entlang der Ecke ausgebildet ist.

5. Elektronische Vorrichtung nach Anspruch 4, wobei sich das Klebeelement (210) zumindest teilweise entlang einer Kante der flexiblen Anzeige (101) erstreckt.

6. Elektronische Vorrichtung nach Anspruch 1, wobei das optisch transparente Klebeelement (360) an dem gekrümmten Abschnitt eine größere Dicke als an dem flachen Abschnitt aufweist.

7. Elektronische Vorrichtung nach einem der Ansprüche 1 bis 6, wobei die zweite Fläche (720) einen Bereich gemäß einem leitfähigen Abschnitt (211a) des Trägerelements (211) und einen Bereich gemäß einem nichtleitfähigen Abschnitt (211b) des Trägerelements (211) beinhaltet.

8. Elektronische Vorrichtung nach einem der Ansprüche 1 bis 7, ferner umfassend mindestens eine Öffnung (2041, 2042, 2043) in mindestens einem Abschnitt des Klebeelements (2040), das auf dem gekrümmten Abschnitt (302) angeordnet ist.

9. Elektronische Vorrichtung nach Anspruch 8, wobei die mindestens eine Öffnung in der Form einer Durchgangsbohrung (2041, 2042) oder eines Einschnitts (2043) ausgebildet ist.

## Revendications

1. Dispositif électronique (100), comprenant :
un boîtier (110) qui comporte une plaque avant (102) comportant une partie pla te (301) et une partie incurvée (302) s'étendant à partir de la partie plate (301), une plaque arrière (111) faisant face à une direction opposée à la plaque avant (102), et un organe latéral (118) entourant un espace entre la plaque avant (102) et la plaque arrière (111) ;
un organe de support (211, 1820, 2020) positionné dans l'espace et relié à l'or gane latéral (118, 1810, 2010) ;
un écran flexible (101) entre l'organe de support (211) et la plaque avant (102) dans l'espace et visuellement exposé à travers la plaque avant (102) ;
un organe adhésif (210, 1100, 2040) entre l'écran flexible (101) et l'organe de support (211, 1820, 2020),
dans lequel l'organe de support (211, 1820, 2020) comporte :
une première surface (710) qui recouvre au moins partiellement la partie plate (301) en vue de dessus de la plaque avant (102), fait face à l'écran flexible (101), et est couplée à l'écran flexible (101) par l'interm édiaire d'une première partie (210a) de l'organe adhésif (210, 1100, 204 0), et
une deuxième surface (720) qui recouvre au moins partiellement l a partie incurvée (302) en vue de dessus de la plaque avant (102) et q ui fait face à l'écran flexible (101),
**caractérisé en ce qu'**une deuxième partie (210b) de l'organe a dhésif (210, 1100, 2040) est disposée sur l'écran flexible (101) et est positionnée de façon à être écartée de la deuxième surface (720) tou t en recouvrant au moins partiellement la deuxième surface (720), et
un organe non adhésif (1000) disposé sur la deuxième partie (210b) de l'organ e adhésif (210) pour faire face à la deuxième surface (720) de l'organe de support (2 11),
dans lequel la deuxième surface (720) de l'organe de support (211, 182 0, 2020) est positionnée de façon à être écartée de l'écran flexible (101), d'une deuxième distance supérieure à une première distance par laquelle la première surface (710) de l'organe de support (211, 1820, 2020) est écartée de l'écran flexible (101), pour former un espace de séparation entre l'organe non adhésif ( 1000) et la deuxième surface (720) de l'organe de support (211, 1820, 2020).

2. Dispositif électronique selon la revendication 1, dans lequel l'organe non adhésif (1000) comporte un organe tampon.

3. Dispositif électronique selon la revendication 1, dans lequel la deuxième surface (720) a une forme incurvée le long de la partie incurvée (302).

4. Dispositif électronique selon l'une des revendications 1 à 3, dans lequel :
la plaque avant (102) comporte des premier et deuxième bords (E2, E4) non p arallèles, et un coin reliant le premier bord (E2) et le deuxième bord (E4) ; et
la deuxième surface (720) est au moins partiellement formée le long du coin.

5. Dispositif électronique selon la revendication 4, dans lequel l'organe adhésif (21 0) est au moins partiellement prolongé le long d'un bord de l'écran flexible (101).

6. Dispositif électronique selon la revendication 1, dans lequel l'organe adhésif opti quement transparent (360) présente une épaisseur plus importante au niveau de la pa rtie incurvée qu'au niveau de la partie plate.

7. Dispositif électronique selon l'une des revendications 1 à 6, dans lequel la deu xième surface (720) comporte une région correspondant à une partie conductrice (211 a) de l'organe de support (211) et une région correspondant à une partie non conduct rice (211b) de l'organe de support (211).

8. Dispositif électronique selon l'une des revendications 1 à 7, comprenant en outr e au moins une ouverture (2041, 2042, 2043) dans au moins une partie de l'organe a dhésif (2040) disposée sur la partie incurvée (302).

9. Dispositif électronique selon la revendication 8, dans lequel ladite au moins une ouverture présente la forme d'un passage traversant (2041, 2042) ou d'une incision ( 2043).
